**Europäisches Patentamt**

**European Patent Office**

**Office européen des brevets**

(11) Veröffentlichungsnummer : **0 458 392 B1**

(12)

# EUROPÄISCHE PATENTSCHRIFT

(45) Veröffentlichungstag der Patentschrift :
09.08.95 Patentblatt 95/32

(51) Int. Cl.$^6$ : **G01P 5/00,** G01S 15/58

(21) Anmeldenummer : **91201148.3**

(22) Anmeldetag : **11.05.91**

(54) **Dopplervorrichtung zur Messung der Strömungsgeschwindigkeit.**

(30) Priorität : **21.05.90 CH 1720/90**

(43) Veröffentlichungstag der Anmeldung :
**27.11.91 Patentblatt 91/48**

(45) Bekanntmachung des Hinweises auf die
Patenterteilung :
**09.08.95 Patentblatt 95/32**

(84) Benannte Vertragsstaaten :
**CH DE ES FR GB IT LI**

(56) Entgegenhaltungen :
EP-A- 0 161 956
EP-A- 0 222 913
EP-A- 0 362 631

(73) Patentinhaber : **KONTRON INSTRUMENTS
HOLDING N.V.
Julianaplein 22
Willemstad, Curacao (AN)**

(72) Erfinder : **Burckhardt, Christoph Benedikt
Rebgasse 14
CH-4132 Muttenz (CH)**

(74) Vertreter : **Riccardi, Sergio
Riccardi & Co.
Via Macedonio Melloni, 32
I-20129 Milano (IT)**

**Beschreibung**

Die Erfindung betrifft eine Doppler-Messvorrichtung zur Messung der Strömungsgeschwindigkeit eines Fluids, das Partikel mitführt, die Ultraschallwellen reflektieren, mit den Merkmalen des ersten Teiles von Anspruch 1.

Beim gepulsten Dopplerverfahren wird die punktuelle Strömungsgeschwindigkeit eines Fluids, das Ultraschallwellen reflektierende Partikel mitführt, z.B. Blut, in einem bestimmten Volumenelement gemessen. Dazu wird eine Folge von Ultraschallimpulsen ausgesendet von einem Wandler. Jeweils eine Zeit $\tau$ nach dem Sendeimpuls wird ein Empfangstor für eine kurze Zeit geöffnet, dabei ist

$$\tau = 2d/c, \quad (1)$$

wobei d die Distanz zum Volumenelement ist und c die Schallgeschwindigkeit. So erhält man eine Folge von (kurzen) Empfangssignalen. Diese werden nun mit geeigneten elektronischen Mitteln zu einem kontinuierlichen Dopplersignal verarbeitet. Die Frequenz dieses Dopplersignals gibt die punktuelle Strömungsgeschwindigkeit v nach der bekannten Formel

$$v = - ( f_D \cdot c ) / ( 2f_1 \cos\theta ) \quad (2)$$

wobei $f_D$ die Dopplerfrequenz , c die Schallgeschwindigkeit, $f_1$ die Frequenz des ausgesendeten Ultraschallsignals und $\theta$ der Winkel zwischen Schallstrahl und Geschwindigkeitsrichtung bedeuten. Es ist dabei zu beachten, dass die Dopplerfrequenz $f_D$ die Differenz zwischen der Frequenz des empfangenen Signals und des gesendeten Signals ist.

Im allgemeinen macht man eine Kurzzeit-Fourier-Transformation des Dopplersignals. Dadurch wird die Verteilung der Strömungsgeschwindigkeit als Funktion der Zeit ermittelt.

Beim gepulsten Dopplerverfahren wird das Echosignal periodisch abgetastet, d.h. es wird nur an periodischen "Stützpunkten" gemessen. Nach dem Theorem von Nyquist ist daher die höchste eindeutig messbare Dopplerfrequenz, und damit die höchste eindeutig messbare Geschwindigkeit begrenzt.

Der Wert der höchsten eindeutig messbaren Strömungsgeschwindigkeit lässt sich durch folgende Formel ermitteln:

$$|v_{max}| = ( c^2 ) / ( 8f_1 d \cos\theta ) \quad (3)$$

Dabei ist c die Schallgeschwindigkeit, $f_1$ die Ultraschallfrequenz, d die Tiefe und $\theta$ der Winkel zwischen Schallstrahl und Geschwindigkeitsrichtung. Mit dieser Formel lässt sich z.B. für d = 15 cm, $\Theta = 0$ , $f_1$= 3 MHz und c= 1540 m/sec der Wert $v_{max}$ = 0.66 m/sec berechnen. In der Praxis treten oft höhere Geschwindigkeiten auf. Diese höheren Geschwindigkeiten werden "gefaltet" (Englisch: "alias"), d.h. sie werden als niedrigere Geschwindigkeiten oder als Geschwindigkeiten mit umgekehrter Richtung dargestellt. Dies ist ein ernsthafter Nachteil dieses Verfahrens.

Um den Messbereich der punktuellen Strömungsgeschwindigkeit zu erweitern, die mit einem gepulsten Dopplerverfahren eindeutig gemessen werden kann, werden folgende Massnahmen verwendet. Alle diese Massnahmen haben jedoch gewisse Nachteile.

1. Wahl einer niederen Sendefrequenz $f_1$:

Wie aus Glg. (3) ersichtlich, wird dann $v_{max}$ grösser. Damit sinkt aber die räumliche Auflösung und die Empfindlichkeit des Verfahrens, weil bei tieferer Frequenz weniger Leistung zurückgestreut wird. In der Praxis liegt daher die untere Grenze der verwendeten Frequenz bei etwa 2 MHz.

2. Baseline Shift:

Der normale Messbereich liegt zwischen $-v_{max}$ und $+v_{max}$. Durch eine einfache Aenderung der Auswertung gelingt es, diesen Messbereich zu verschieben, z.B. so, dass zwischen 0 und $2v_{max}$ gemessen wird. Dies ist daher nur nützlich, wenn ausschliesslich positive Geschwindigkeiten auftreten. Mit dieser Massnahme wird lediglich eine Verschiebung, nicht eine Vergrösserung des Messbereichs erzielt.

3. Erhöhung der Impulsfolgefrequenz:

Durch eine Erhöhung der Impulsfolgefrequenz und damit der Abtastrate über die übliche Grenze wird eine Erhöhung der maximal messbaren Geschwindigkeit erzielt. Der Nachteil dieser Massnahme ist, dass auch Echosignale von nicht erwünschten Volumenelementen erhalten werden, die ausserhalb des gewünschten Volumenelements liegen, das untersucht werden soll. Die unerwünschten Volumenelemente liegen näher zum Wandler als das gewünschte Volumenelement und geben daher stärkere Echosignale, die den Empfang des gewünschten Echosignals stören.

Die unter 1. bis 3. aufgeführten Massnahmen/verfahren werden in der Praxis alle angewendet, was zeigt, dass keines davon eine vollständig befriedigende Lösung darstellt.

Folgendes vierte Verfahren ist ebenfalls bekannt, wird in der Praxis jedoch nicht verwendet.

4. Tracking Doppler-Verfahren:

Bei diesem Verfahren wird festgestellt, wann die Geschwindigkeit die Nyquistgrenze überschreitet, und man addiert dann ein Vielfaches der Geschwindigkeit $v_{max}$, die durch Glg (3) definiert ist. Das Hauptproblem bei diesem Verfahren ist es, zuverlässig festzustellen, in welchem Nyquistbereich man sich befindet. Dieses Verfahren wird daher in der Praxis nicht verwendet.

Zur Bestimmung eines Durchschnittswerts $v_a$ der Strömungsgeschwindigkeit ist aus der U.S. Patent Specification No. 4,534,357 ein sogenanntes Zweifrequenzverfahren bekannt, das eine Erweiterung des Messbereichs bei einem gepulsten Dopplerverfahren zur Messung der Strömungsgeschwindigkeit erlaubt. Die Merkmale des ersten Teiles von Anspruch 1 sind aus diesem Dokument bekannt. Bei diesem bekannten Zweifrequenzverfahren werden benachbarte aber voneinander getrennte Frequenzbänder der Echosignale in je einem separaten Signalverarbeitungspfad verarbeitet. Der höchste Wert $v_{a\,max}$, der sich durch dieses Verfahren ermitteln lässt, beträgt

$$v_{a\,max} = ( c^2 ) / ( 8(f_2 - f_1) d \cos\theta )  \quad (4)$$

$f_1$ und $f_2$ sind die Mittenfrequenzen der Frequenzbänder.

Die übrigen Symbole sind dieselben wie in Glg. (3). Da $(f_2-f_1) < f_o$ ist die bei einem Zweifrequenzverfahren maximal messbare Geschwindigkeit $v_{a\,max}$ grösser als die durch Gleichung (3) definierte $v_{max}$.

Es ist wichtig, den folgenden Unterschied zwischen dem soeben erwähnten Zweifrequenzverfahren und den anderen oben beschriebenen gepulsten Dopplerverfahren festzuhalten:

Durch das erwähnte Zweifrequenzverfahren ermittelt man aus wenigen Messpunkten, typisch sind 4 bis 8 Messpunkte, einen Durchschnittswert der Strömungsgeschwindigkeit. Dieses Verfahren ist daher vor allem für "Color Flow Mapping" geeignet.

Bei den anderen gepulsten Dopplerverfahren, die oben beschrieben sind, wird aus relativ vielen Messpunkten, typisch sind 64 bis 256 Messpunkte, ein Spektrum bestimmt. Man erhält hier also eine wesentlich detailliertere Information über die Geschwindigkeitsverteilung in Funktion der Zeit, braucht aber auch mehr Messpunkte und damit mehr Zeit. Diese Verfahren werden daher zur Messung der Strömungsgeschwindigkeit in einem einzigen Volumenelement verwendet.

Der Erfindung liegt die Aufgabe zugrunde, eine Doppler-Messvorrichtung zur Verfügung zu stellen, mit der eine Messung der zeitlichen Verteilung der Strömungsgeschwindigkeit durchführbar ist, wobei der Messbereich, in dem die Strömungsgeschwindigkeit eindeutig messbar ist, erheblich erweitert ist.

Die Lösung dieser Aufgabe ist eine erfindungsgemässe Doppler-Messvorrichtung mit den Merkmalen des Anspruches 1.

Die erfindungsgemässe Lösung ermöglicht, die oben erwähnten Nachteile der bisher bekannten Massnahmen zur Erweiterung des Messbereiches der Strömungsgeschwindigkeit zu beheben.

In einer bevorzugten Ausführungsform ist der Sender so eingerichtet, dass das Frequenzspektrum der periodischen Folge von Sendeimpulsen aus zwei benachbarten, aber voneinander getrennten Frequenzbändern besteht.

Die Mittel zur Auswertung der Signalfolge enthalten vorzugsweise Mittel zur Durchführung einer Analyse einer Signalfolge, die sich aus den Signalen zusammensetzt, die den gemessenen und den errechneten komplexen Werten entsprechen ($P(0)$, $P(\Delta t/2)$, $P(\Delta t)$, $P(3\,\Delta t/2)$, $P(2\,\Delta t)$, ...), wobei durch diese Analyse ein zweites Ausgangssignal erzeugt wird, dessen Amplitude der Phasenänderung eines Zeigers, der durch die Signale der Signalfolge definiert ist, und dadurch dem momentanen Wert der Strömungsgeschwindigkeit entspricht.

Im folgenden werden anhand der beiliegenden Zeichnungen einige Ausführungsbeispiele der Erfindung beschrieben. Es zeigen:

Fig. 1      ein stark vereinfachtes Blockschema, das den prinzipiellen Aufbau einer erfindungsgemässen Doppler-Messvorrichtung darstellt

Fig. 2 und 3      ein Diagramm zur Erläuterung der Funktion der Recheneinheit 213 in Fig. 1

Fig. 4      eine erste Ausführungsform der erfindungsgemässen Doppler-Messvorrichtung gemäss Fig. 1

Fig. 5      eine zweite Ausführungsform der erfindungsgemässen Doppler-Messvorrichtung gemäss Fig. 1

Fig. 6      Zeigerdiagramme

Fig. 7      ein Blockschema einer Doppler-Messvorrichtung

Fig. 8      das Frequenzspektrum einer Folge von Sendeimpulsen mit der Wellenform gemäss

EP 0 458 392 B1

Fig. 9

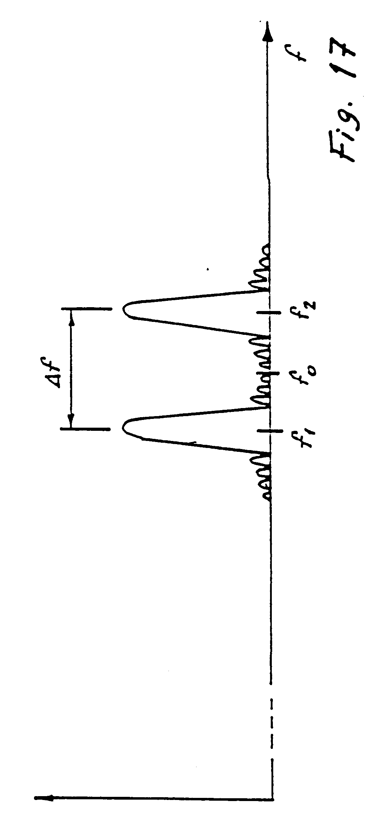

Fig. 9     Sendeimpulse
Fig. 10     ein Blockschema einer ersten Ausführungsform des Senders 15 in Fig. 7
Fig. 11     ein Blockschema des Registers 43 in Fig. 10
Fig. 12     Signaldiagramme zur Erläuterung der Funktionsweise des Senders gemäss Fig. 10
Fig. 13     ein Blockschema einer zweiten Ausführungsform des Senders 15 in Fig. 7
Fig. 14     ein Diagramm des Signals am Eingang der Torschaltung 84 in Fig. 13
Figuren 15 und 16     Sendeimpulse
Fig. 17     eine schematische Darstellung des Frequenzspektrums einer Folge von Sendeimpulsen mit der Wellenform gemäss Fig. 15 oder 16.

## Beschreibung des prinzipiellen Aufbaus

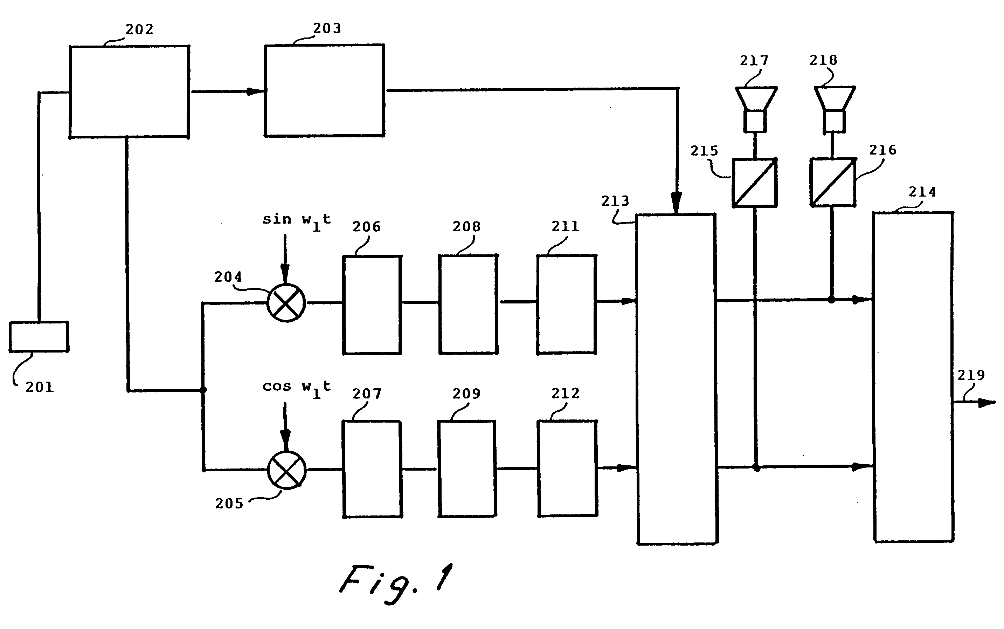

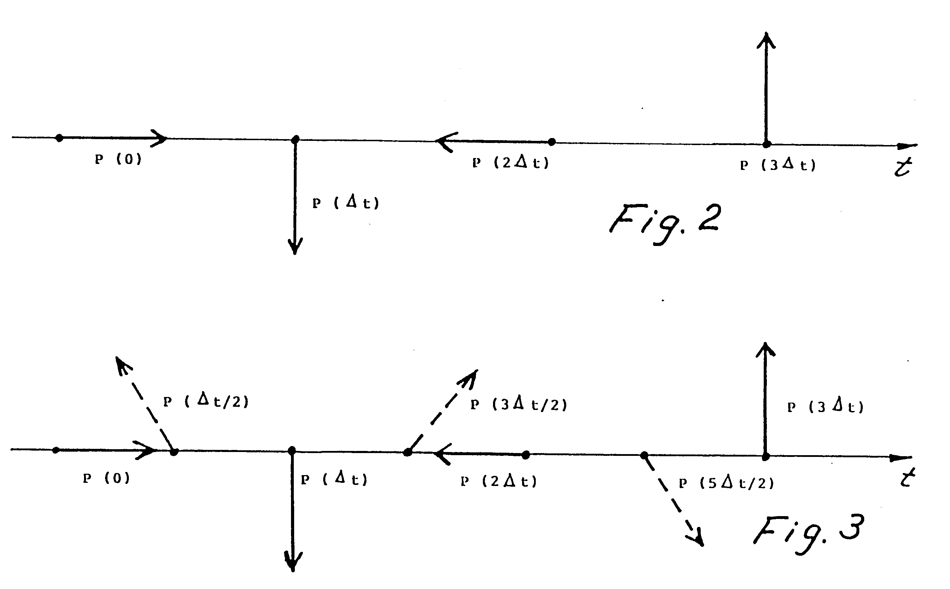

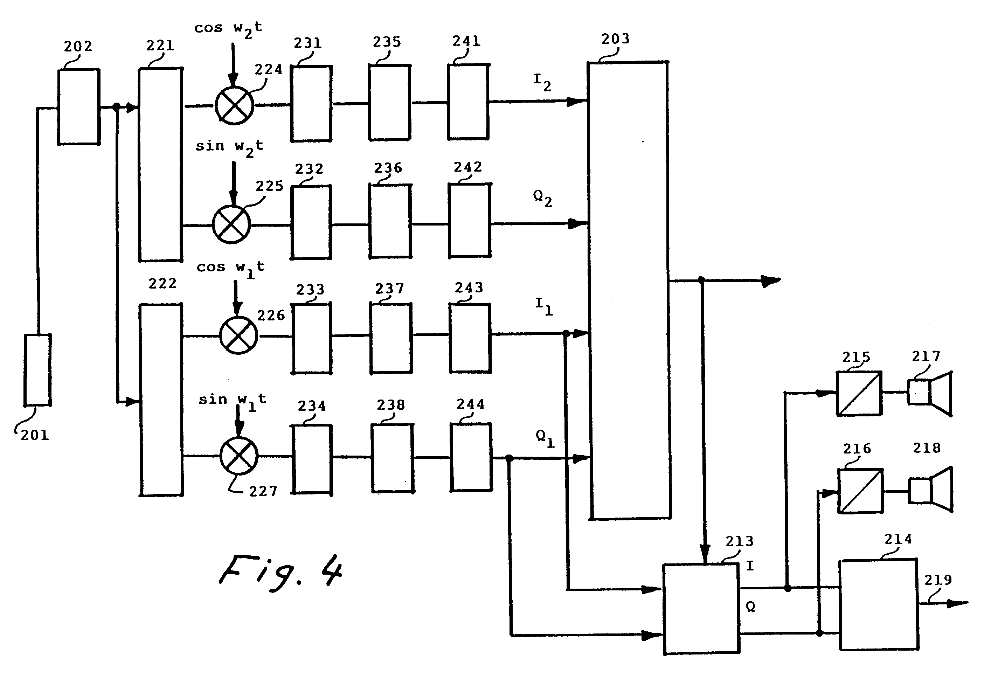

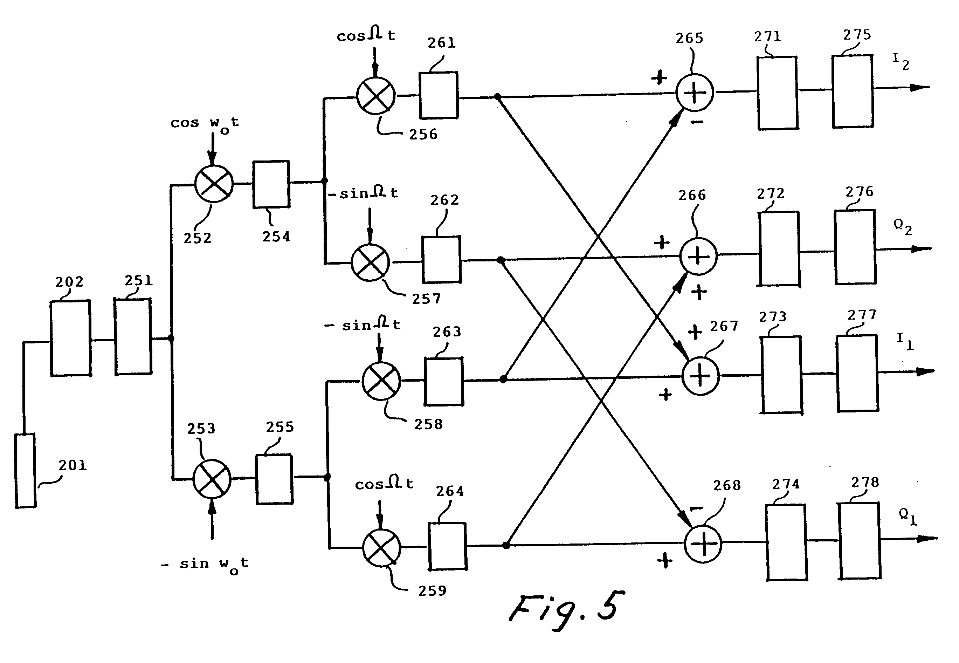

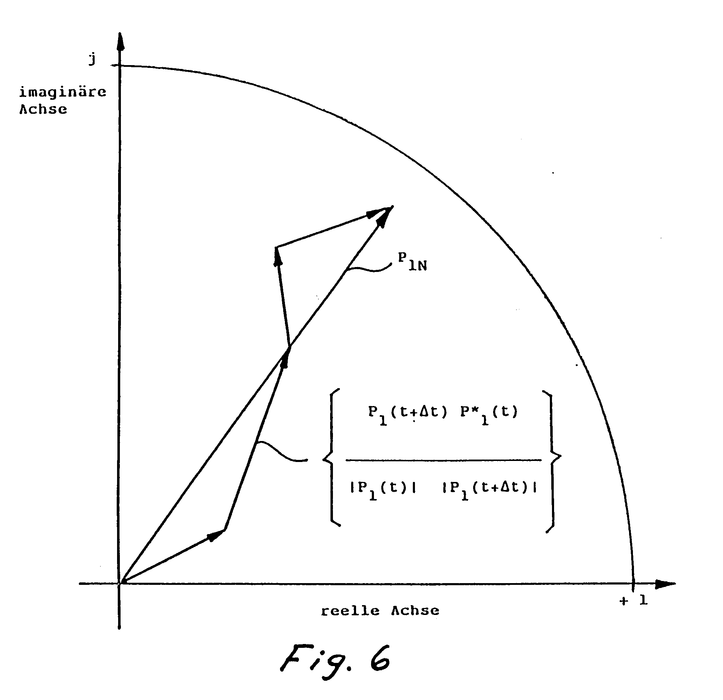

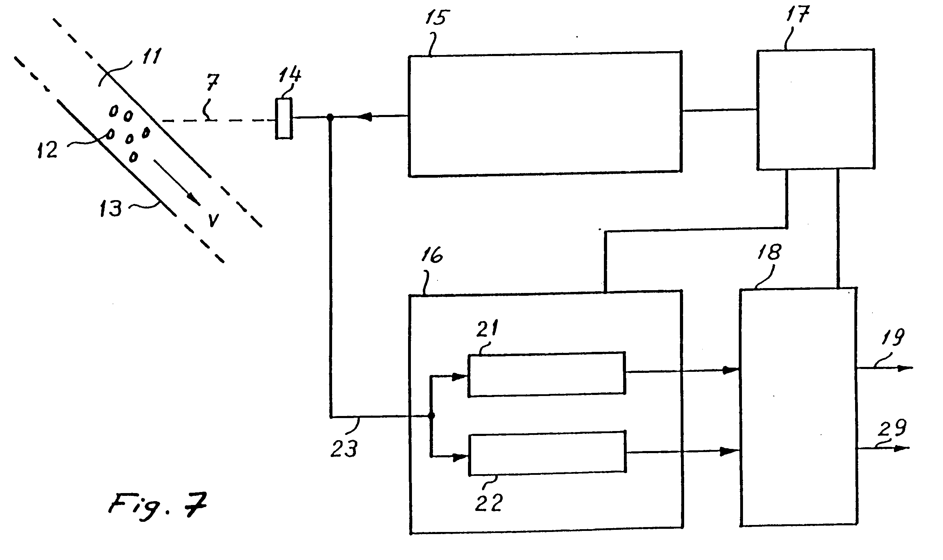

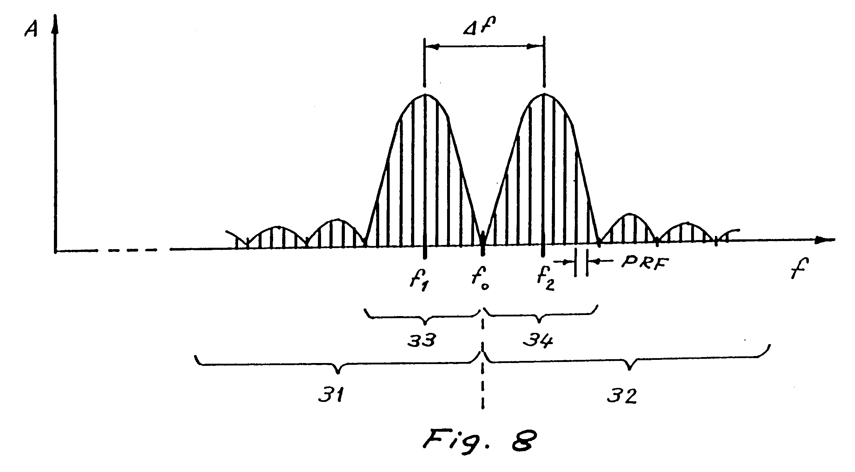

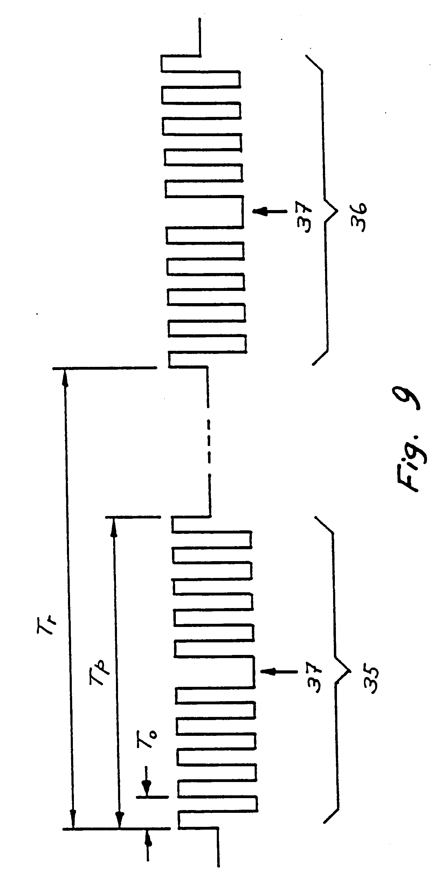

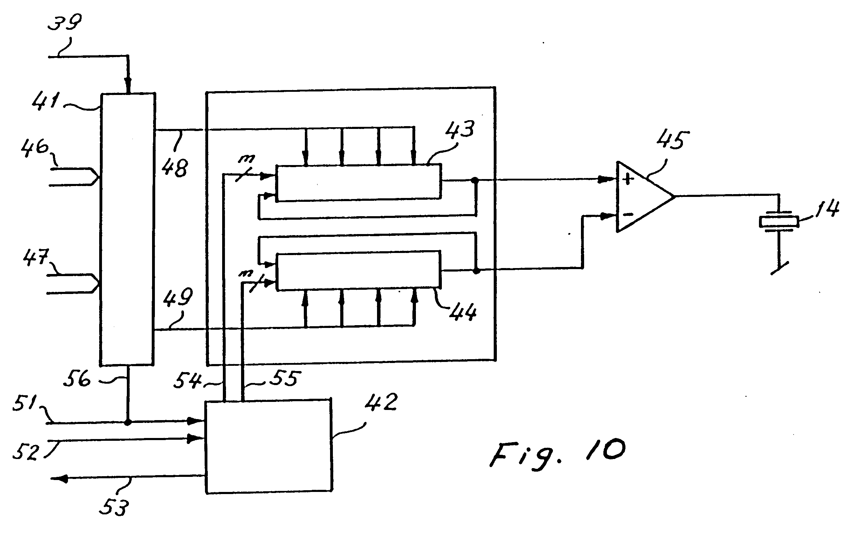

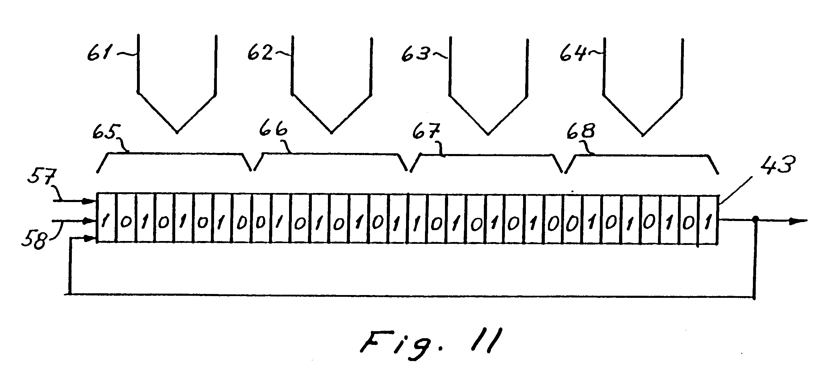

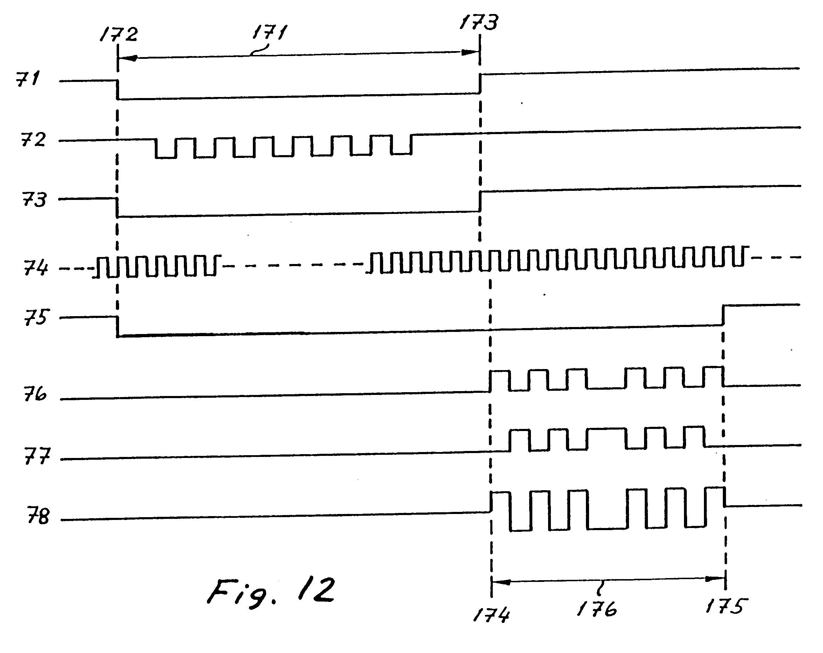

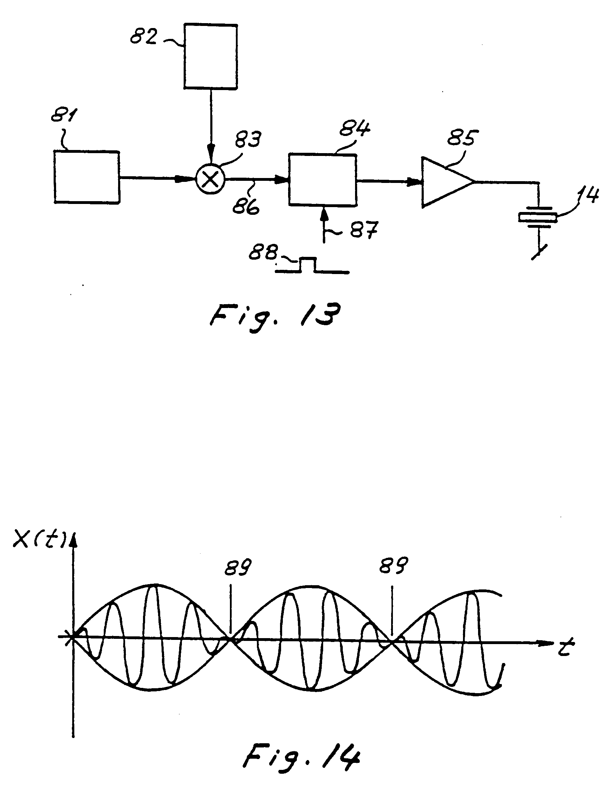

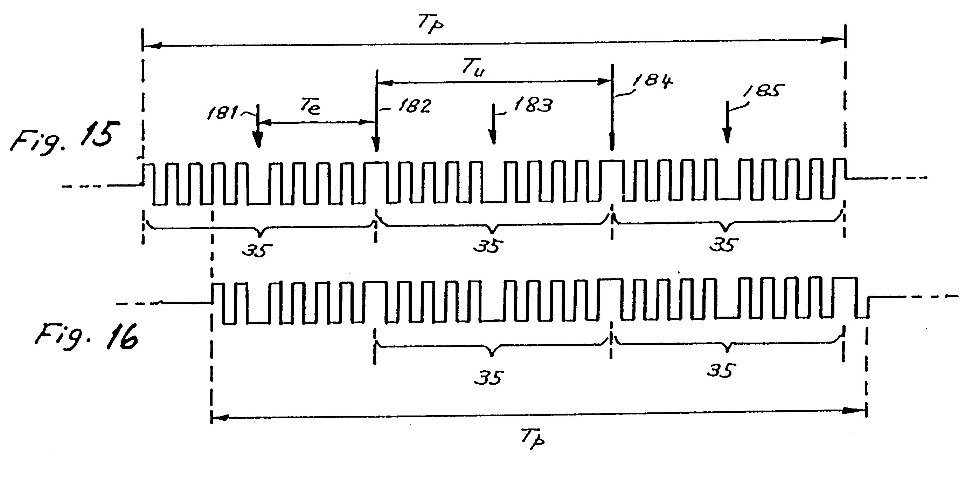

Die Fig. 1 zeigt ein stark vereinfachtes Blockschema, das den prinzipiellen Aufbau einer erfindungsgemässen Doppler-Messvorrichtung darstellt. Ein mit einem Sender/Empfänger 202 verbundener Ultraschallwandler 201 sendet Sendeimpulse, deren Frequenzspektrum aus zwei benachbarten, aber voneinander getrennten Frequenzbändern besteht. Solche Sendeimpulse und Vorrichtungen zur Erzeugung derselben sind nachstehend anhand der Figuren 7 bis 17 ausführlich beschrieben. Die Anordung in Fig. 1 hat zwei getrennte Kanäle zur Verarbeitung der empfangenen Echosignale. Im oberen Kanal, der durch eine Schaltung 203 gebildet ist, werden Echosignale in beiden Frequenzbändern der Sendeimpulse verarbeitet und am Ausgang dieses Kanals wird ein Ausgangsignal erhalten, das einem Durchschnittswert der Strömungsgeschwindigkeit in einem untersuchten Punkt des Flussweges entspricht. Dieser Durchschnittswert hat die obere Grenze $v_{a\ max}$, die in Glg. (4) gegeben ist. Mit der Schaltung 203 ist daher ein Durchschnittswert der Strömungsgeschwindigkeit in einem grösseren Messbereich messbar, als mit konventionellen Dopplerverfahren. Zur Ermittlung des Durchschnittswerts $v_a$ der Strömungsgeschwindigkeit in einem untersuchten Punkt des Flussweges werden typischerweise Echosignale von 4 bis 8 gesendeten Impulsen verarbeitet, was durchaus ausreichend ist.

Der untere Kanal in Fig. 1 ist ein konventioneller gepulster Dopplerkanal bei der Frequenz $f_1$, bestehend aus zwei Quadraturdemodulatoren 204 und 205, die das Signal mit Signalen der Form $\sin \omega_1 t$ und $\cos \omega_1 t$ mischen, nachfolgenden Tiefpassfiltern 206, 207, Integrier und Haltegliedern (integrate and hold circuits) 208, 209, die das Signal zum gewünschten Zeitpunkt abtasten und nachfolgenden Festzeichenlöschern (wall filter) 211, 212 zur Eliminierung der stationären und quasistationären Echosignale. Am Ausgang des Festzeichenlöschers 211 wird ein Quadratursignal a(t) und am Ausgang des Festzeichenlöschers 212 wird ein Quadratursignal b(t) abgegeben. a(t) und b(t) sind kontinuierliche Signale. Für die nachstehende Analyse sind jedoch nur die Werte dieser Signale zu den Zeitpunkten zu berücksichtigen, wo das Signal erfasst wurde. Diese Zeitpunkte sind 0, $\Delta t$, $2\Delta t$, ... und wir haben deshalb die Signalwerte

$$a(0),\ a(\Delta t),\ a(2\Delta t),\ a(3\Delta t)\ ...,\qquad (5a)$$

$$b(0),\ b(\Delta t),\ b(2\Delta t),\ b(3\Delta t)\ ...,\qquad (5b)$$

dabei ist $\Delta t$ die Zeit zwischen Sendeimpulsen. $a(k\Delta t)$ und $b(k\Delta t)$ sind gemessene Werte. Diese Werte können als Real- und Imaginärteil eines komplexen Signals

$$P(k\Delta t) = a(k\Delta t) + jb(k\Delta t)$$

aufgefasst werden. Aufeinanderfolgende Signalpaare $a(k\Delta t)$, $b(k\Delta t)$ definieren daher jeweils einen gemessenen komplexen Wert $P(0)$, $P(\Delta t)$, $P(2\Delta t)$, $P(3\Delta t)$,.... Die Geschwindigkeitswerte, die aus der Aenderung der Phase von P mit der Zeit abgeleitet werden können, haben die übliche obere Geschwindigkeitsgrenze $v_{max}$ nach Glg.(3).

Erfindungsgemäss werden das Ausgangssignal der Recheneinheit 203 und die Signale $a(k\Delta t)$ und $b(k\Delta t)$ an den Ausgängen der Festzeichenlöscher 211 und 212 Eingänge einer Recheneinheit 213 zugeführt. Diese Signale werden in der Recheneinheit 213 verknüpft, um durch Interpolation gerechnete Werte von Signalpaaren

$$a'(k\Delta t/2),\ b'(k\Delta t/2)$$

zu erzeugen, die gerechnete komplexe Werte $P(\Delta t/2)$, $P(3\Delta t/2)$, $P(5\Delta t/2)$,... definieren, wobei für diese Werte gilt

$$P(k\Delta t/2) = a'(k\Delta t/2) + j\ b'(k\Delta t/2)$$

Die Werte $a'(k\Delta t/2)$, $b'(k\Delta t/2)$ sind mit dem durch das Ausgangssignal der Recheneinheit 203 ermittelten Durchschnittswert $v_a$ der Strömungsgeschwindigkeit und mit den gemessenen Werten $a(k\Delta t)$, $b(k\Delta t)$ der Signale an den Ausgängen der Festzeichenlöscher 211 und 212 konsistent. Zwischen aufeinanderfolgenden Signalpaaren die gemessenen Werte $a(k\Delta t)$, $b(k\Delta t)$ entsprechen, kann z. B. in der Recheneinheit 213 ein Signalpaar $a'(k\Delta t/2)$, $b'(k\Delta t/2)$ erzeugt werden, die durch Interpolation gerechneten Werten entsprechen. In der Re-

4

cheneinheit 213 können auch 2 oder mehr solche interpolierte Werte zwischen aufeinanderfolgende gemessene Werte gerechnet werden. Wenn 2 interpolierte Werte gerechnet werden, so sind die entsprechenden Signalpaare $a'(k \Delta t/3)$, $b'(k\Delta t/3)$. Wenn n interpolierte Werte gerechnet werden, so sind die entsprechenden Signalpaare $a'(k \Delta t/[n+1])$, $b'(k\Delta t/[n+1])$. k und n können die Werte 1, 2, 3, etc. haben.

Am Ausgang der Recheneinheit 213 wird eine Folge von Signalpaaren abgegeben, die sich aus den gemessenen Signalpaaren $a(k\Delta t)$, $b(k\Delta t)$ und den gerechneten Signalpaaren $a'(k\Delta t/2)$, $b'(k\Delta t/2)$ zusammensetzt.

Jedes Signalpaar der Signalfolge an den Ausgängen der Recheneinheit 213 wird einer Recheneinheit 214 zugeführt, in der eine Analyse der Signalfolge, z.B. durch eine Fourier Transformation, durchgeführt wird, um ein Ausgangssignal zu erzeugen, dessen Amplitude der Phasenänderung eines Zeigers, der durch die Signale der Signalfolge definiert ist, und dadurch dem momentanen Wert der Strömungsgeschwindigkeit entspricht.

Bei der Durchführung der Analyse in der Recheneinheit 214 wird Information berücksichtigt, die in 64 bis 128 Echosignalen enthalten ist. Diese Anzahl Echosignale ist also wesentlich grösser als die Anzahl der Echosignale (4 bis 8), deren Informationsgehalt für die Berechnung des Durchschnittswertes $v_a$ der Strömungsgeschwindigkeit in der Recheneinheit 203 berücksichtigt wird.

Jedes Signal eines Signalpaars an den Eingängen der Recheneinheit 214 wird ausserdem über einen Digital/Analog-Umsetzer Mitteln 215 bzw. 216 zur akustischen Wiedergabe des Signals zugeführt.

Die Signale der Signalfolge, die sich aus den Signalen zusammensetzt, die den gemessenen Werten $a(k\Delta t)$, $b(k\Delta t)$ und den gerechneten Werte $a'(k\Delta t/2)$, $b'(k\Delta t/2)$ entsprechen, weisen untereinander kürzere zeitliche Abstände als die Signale auf, die den gemessenen Werten $a(k\Delta t)$, $b(k\Delta t)$ entsprechen.

Die Funktion der Recheneinheit 213 wird nun an einem einfachen Beispiel gemäss Figuren 2 und 3 erklärt. In Fig. 2 ist ein Signal $P(k\Delta t)$ dargestellt, das einen Phasenschub von $\Delta\varphi = + 270°$ zwischen Messpunkten hat. Da die Abtastfrequenz aber zu klein ist, wird dies als Phasenschub von $\Delta\varphi' = -90°$ gemessen. Dies ist ein typisches Beispiel von "aliasing"; sowohl Betrag wie Vorzeichen der gemessenen Phase und damit der gemessenen Geschwindigkeit sind falsch. Der Recheneinheit 213 wird das Ausgangssignal der Recheneinheit 203 zugeführt, welches Signal dem Durchschnittswert $v_a$ der Strömungsgeschwindigkeit entspricht. Aus diesem Durchschnittswert lässt sich ermitteln, dass der Phasenschub zwischen Abtastwerten $\Delta\varphi = + 270°$ beträgt. Es ist daher möglich, zwischen den gemessenen Werten des Signals gerechnete Werte zu interpolieren.

Die in Fig. 3 gestrichelt gezeichneten Werte $P(\Delta t/2)$, $P(3\Delta t/2)$, $P(5\Delta t/2)$ sind interpolierte Werte. Die Interpolation von Werten zwischen gemessene Werte, wozu die Information der mittleren Geschwindigkeit aus einem Zweifrequenzverfahren benützt wird, ist ein wesentliches Merkmal der hier beschriebenen Erfindung.

Die Interpolation des komplexen Signals erfolgt in der Polardarstellung, d.h. Betrag und Phase werden interpoliert. Aus Fig. 3 ist ersichtlich, dass das Signal nun korrekt wiedergegeben wird; zwischen einzelnen Werten sieht man einen Phasenschub von + 135° und zwischen gemessenen Werten einen Phasenschub von 270°. Da durch die Interpolation die Anzahl der insgesamt verfügbaren komplexen Werte verdoppelt wird, wird auch der Messbereich verdoppelt.

Die in Fig. 3 dargestellte Signalfolge der gemessenen und der gerechneten komplexen Werte wird der Recheneinheit 214 zugeführt, die eine Fourier Transformation ausführt.

Zwischen gemessenen Werten $a(k\Delta t)$, $b(k\Delta t)$ können nicht nur ein, sondern mehrere gerechnete Werte $a'(k\Delta t/(n+1))$, $b'(k\Delta t/(n+1))$ interpoliert werden. Nach dem Abtasttheorem ist bekannt, dass die maximal eindeutig messbare Frequenz $f_{max}$ gegeben ist durch

$$f_{max} = \pm f_s/2 , \quad (6)$$

wobei $f_s$ die Abtastfrequenz bedeutet. Wenn wir zwischen gemessene Werte n Werte interpolieren so wird die Abtastfrequenz mit (n+1) multipliziert. Die neue Frequenzgrenze $F_{max}$ ist damit

$$F_{max} = \pm(n + 1) f_s/2 = (n + 1) f_{max} \quad (7)$$

Eine neue, $F_{max}$ entsprechende, obere Geschwindigkeitsgrenze $V_{max}$ kann aus Glg. (3) wie folgt abgeleitet werden

$$V_{max} = (n + 1) v_{max}$$

$$V_{max} = (n + 1) c^2 / 8f_1 d\cos\theta \quad (8)$$

In Glg. (4) haben wir eine obere $v_{a\,max}$ Grenze für die Ermittlung der mittleren Geschwindigkeit aus dem Zweifrequenz Verfahren. Vorzugsweise setzt man $V_{max} = v_{a\,max}$, also

$$(n + 1) c^2 / 8f_1 d \cos \theta = c^2 / 8(f_2 - f_1)d \cos\theta$$

$$(n + 1) / f_1 = 1 / (f_2 - f_1)$$

$$n = (f_1 / (f_2 - f_1)) - 1 \quad (9)$$

Glg. (9) gibt die Anzahl Messwerte, die vorzugsweise zwischen gemessenen Werten interpoliert werden.

Nach den bisherigen Erfahrungen ist eine Erweiterung des Messbereiches bei der Zweifrequenz-Methode um einen Faktor 5 möglich. Dies bedingt die Interpolation von 4 Werten zwischen je zwei gemessene Werte.

Beschreibung einer ersten Ausführungsform

Fig. 4 zeigt eine erste Ausführungsform der erfindungsgemässen Doppler-Messvorrichtung gemäss Fig. 1. Gemäss Fig. 4 sendet ein mit einem Sender/Empfänger 202 verbundener Ultraschallwandler 201 Sendeimpulse, deren Frequenzspektrum aus zwei benachbarten, aber voneinander getrennten Frequenzbändern besteht. Solche Sendeimpulse und Vorrichtungen zur Erzeugung derselben sind nachstehend anhand der Figuren 7 bis 17 ausführlich beschrieben. In der Schaltung gemäss Fig.4 wird das mit dem Ultraschallwandler 201 und dem Sender/Empfänger 202 gewonnene Empfangssignal in zwei Quadraturkanäle eingespeist. Einer dieser Kanäle verarbeitet die Echosignale im Frequenzband mit der Mittenfrequenz $f_2$. Der zweite Quadraturkanal verarbeitet die Echosignale im Frequenzband mit der Mittenfrequenz $f_1$. Der Aufbau dieser Quadraturkanäle ist an sich aus der gepulsten Dopplertechnik bekannt. Jeder dieser Quadraturkanäle besteht aus einem Bandfilter 221 bzw. 222 gefolgt von einem synchronen Demodulator, der Multiplizierer 224,225 bzw. 226, 227 enthält. Die Ausgangssignale der Multiplizierer werden mittels Tiefpassfiltern 231, 232, 233, 234 gefiltert und von Integrier und Haltegliedern 235, 236, 237, 238 abgetastet. Die diesen Gliedern nachgeschalteten Festzeichenlöscher 241, 242, 243, 244 dienen zur Unterdrückung von stationären und quasistationären Echos. Die Ausgangssignale $I_1$, $Q_1$, $I_2$, $Q_2$ dieser Festzeichenlöscher werden in die Recheneinheit 203 eingespeist. Dort werden sie zuerst analog/digital gewandelt und nachher so verarbeitet, dass man am Ausgang der Recheneinheit 203 ein Ausgangssignal erhält, das der mittleren Geschwindigkeit $v_a$ entspricht.

Die Ausgangssignale $I_1$, $Q_1$ der Festzeichenlöscher 243, 244 und das Ausgangssignal der Recheneinheit 203 werden in einer Recheneinheit 213 verarbeitet um als Ausgangssignale eine Folge von Signalpaaren I, Q zu erzeugen, die sich aus den Ausgangssignalen $I_1$, $Q_1$ und aus durch Interpolation für eine der Frequenzen ($f_1$ oder $f_2$) gewonnene Signalpaare I′, Q′ zusammensetzt.

Die Signalfolge am Ausgang der Recheneinheit 213 wird einer Recheneinheit 214 zugeführt, wo das Spektrum mittels einer "Fast Fourier Transform" (FFT) nach einem bekannten Algorithmus gerechnet wird. Die Recheneinheiten 203, 213, 214 werden vorzugsweise mit einem digitalen Signalprozessor aufgebaut, z.B. AD 2100 von Analog Devices. Die Algorithmen, die in den Recheneinheiten 203 und 213 verwendet werden, werden nachstehend beschrieben. Die Ausgangssignale der Recheneinheit 213 werden mittels Digital/Analog-Umsetzer 215, 216 digital/analog gewandelt und zwei Lautsprechern 217, 218 zugeführt. Damit werden diese Ausgangssignale, die einem erweiterten Messbereich der Strömungsgeschwindigkeit entsprechen, akustisch wiedergegeben.

Beschreibung einer zweiten Ausführungsform

Fig. 5 zeigt eine zweite Ausführungsform der erfindungsgemässen Doppler-Messvorrichtung gemäss Fig. 1 In der Schaltung gemäss Fig. 5 sind der Ultraschallwandler 201 und der Sender/Empfänger 202 wie für die Figuren 1 und 4 bereits beschrieben. Mit einem Bandfilter 251 werden Echosignale in beiden Frequenzbändern des Sendesignals gefiltert, d.h. für die Signalverarbeitung durchgelassen.

Mit der Schaltung gemäss Fig. 5 wird ein Doppeldemodulations-Verfahren durchgeführt. Das vom Bandpassfilter 251 abgegebene Echosignal wird zuerst mittels Multiplizierern 252, 253 und Tiefpassfilter 254 und 255 mit $\cos\omega_o t$ und $-\sin\omega_o t$ demoduliert, wobei

$$\omega_o = (\omega_1 + \omega_2) / 2 \quad (10)$$

und nachher mittels Multiplizierern 256, 257, 258, 259 und Tiefpassfilter 261, 262, 263, 264 mit $\cos \Omega t$ und $-\sin\Omega t$ demoduliert, wobei

$$\Omega = (\omega_2 - \omega_1) / 2 \quad (11)$$

Die benötigten Quadratursignale $I_1$, $Q_1$, $I_2$, $Q_2$ werden dann mittels Addierern 265, 266, 267, 268 durch geeignete Additionen und Subtraktionen aus diesen Signalen gewonnen, wobei - wie in Fig. 5 dargestellt - Integrier und Halteglieder 271, 272, 273, 274 und Festzeichenlöscher 275, 276, 277, 278 analog wie in den Schaltungen gemäss Figuren 1 und 4 verwendet werden.Die Schaltung gemäss Fig. 5 ist komplizierter als jene in Fig. 4. Sie bietet jedoch den Vorteil, dass bei der ersten Quadratur-Demodulation die Trägerfrequenz des Sendesignals $\omega_o$ verwendet wird. Diese ist mit hoher Stabilität verfügbar. Die Signalverarbeitung, die die Erzeugung der Ausgangssignale $I_1$, $Q_1$, $I_2$, $Q_2$ der beiden Quadraturkanäle ermöglicht, wird nun wie folgt erläutert:

Das empfangene Signal hat ein Linienspektrum. Die einzelnen Linien haben den Abstand der PRF voneinander, wie bekannt. Wir betrachten hier eine Linie s(t) des Spektrums, die eine Dopplerverschiebung aufweist,

$$s(t) = \cos(\omega_o + \Omega + \omega_{d2})t + \cos(\omega_o - \Omega + \omega_{d1})t \quad (12)$$

$\omega_{d1}$ und $\omega_{d2}$ sind die Dopplerfrequenzen bei $\omega_o-\Omega$ und bei $(\omega_o+\Omega)$.

Durch die erste Demodulation werden Signale I(t) und Q(t) erzeugt, die sich wie folgt definieren lassen: Am Ausgang des Multiplizierers 252 wird folgendes Signal erzeugt:

EP 0 458 392 B1

$$\cos\omega_o t \cos(\omega_o + \Omega + \omega_{d2})t$$
$$+ \cos\omega_o t \cos(\omega_o - \Omega + \omega_{d1})t.$$

Am Ausgang des Tiefpassfilters 254 sind nur die Terme mit der Differenzfrequenz vorhanden, daher ist

$$I(t) = (1/2)\cos(\Omega + \omega_{d2})t + (1/2)\cos(\omega_{d1} - \Omega)t \quad (13)$$

Für den Quadraturkanal wird am Ausgang des Multiplizierers 253 folgendes Signal erzeugt:

$$- \sin\omega_o t\cos(\omega_o + \Omega + \omega_{d2})t$$
$$- \sin\omega_o t\cos(\omega_o - \Omega + \omega_{d1})t .$$

Am Ausgang des Tiefpassfilters 255 sind nur die Terme mit der Differenzfrequenz vorhanden, daher ist

$$Q(t) = (1/2)\sin(\Omega + \omega_{d2})t - (1/2)\sin(\Omega - \omega_{d1})t \quad (14)$$

Durch die zweite Demodulation werden an den Ausgängen der Demodulatoren jeweils folgende Signale erzeugt:

Am Ausgang des Multiplizierers 256:

$$[(1/2)\cos(\Omega + \omega_{d2})t + (1/2)\cos(\Omega - \omega_{d1})t]\cos\Omega t$$

Am Ausgang des Tiefpassfilters 261:

$$a(t) = (1/4)\cos\omega_{d2}t + (1/4)\cos\omega_{d1}t \quad (15)$$

Am Ausgang des Multiplizierers 257:

$$[(1/2)\cos(\Omega + \omega_{d2})t + (1/2)\cos(\Omega - \omega_{d1})t]( - \sin\Omega t).$$

Am Ausgang des Tiefpassfilters 262:

$$b(t) = (1/4)\sin\omega_{d2}t - (1/4)\sin\omega_{d1}t \quad (16)$$

Am Ausgang des Multiplizierers 258:

$$[(1/2)\sin(\Omega + \omega_{d2})t - (1/2)\sin(\Omega - \omega_{d1})t]( - \sin\Omega t)$$

Am Ausgang des Tiefpassfilters 263:

$$c(t) = - (1/4)\cos\omega_{d2}t + (1/4)\cos\omega_{d1}t \quad (17)$$

Am Ausgang des Multiplizierers 259:

$$[(1/2)\sin(\Omega + \omega_{d2})t - 1/2\sin(\Omega - \omega_{d1})t]\cos\Omega t$$

Am Ausgang des Tiefpassfilters 264:

$$d(t) = (1/4)\sin\omega_{d2}t + (1/4)\sin\omega_{d1}t \quad (18)$$

Mit den Addierern 265-268 und den nachgeschalteten Schaltungen werden dann die in Fig. 5 angegebenen Ausgangssignale $I_2$, $Q_2$, $I_1$, $Q_1$ gebildet, die sich wie folgt definieren lassen:

$$I_2(t) = a(t) - c(t) = (1/2)\cos\omega_{d2}t, \quad (19)$$

$$Q_2(t) = b(t) + d(t) = (1/2)\sin\omega_{d2}t, \quad (20)$$

$$I_1(t) = a(t) + c(t) = (1/2)\cos\omega_{d1}t, \quad (21)$$

$$Q_1(t) = d(t) - b(t) = (1/2)\sin\omega_{d1}t. \quad (22)$$

Es ist aus diesen Gleichungen ersichtlich, dass mit der Schaltung gemäss Fig. 5 sich die gewünschten Quadratursignale erzeugen lassen. Zu beachten ist, dass $\omega_{d1}$ zur Sendefrequenz $\omega_1 = \omega_o - \Omega$, und $\omega_{d2}$ zur Sendefrequenz $\omega_2 = \omega_o + \Omega$ zugeordnet ist. Die entsprechenden Geschwindigkeitswerte lassen sich also nach der Doppler-Formel berechnen

$$v_1 = - \omega_{d1} \cdot c / 2 \cdot (\omega_o - \Omega) \cos\theta \quad (23)$$

$$v_2 = - \omega_{d2} \cdot c / 2 \cdot (\omega_o + \Omega) \cos\theta \quad (24)$$

Die Schaltungen zur Weiterverarbeitung der Signale $I_1$, $Q_1$, $I_2$, $Q_2$ sind wie anhand der Fig. 4 bereits beschrieben. Diese Schaltungen sind daher in Fig. 5 nicht gezeigt.

Beschreibung der im Rahmen der Erfindung verwendeten Algorithmen

In der Recheneinheit 203 in Fig. 4 wird die mittlere Geschwindigkeit nach dem Zweifrequenz-Verfahren berechnet. In der Recheneinheit 213 werden zusätzliche Werte des Signals eines Dopplerkanals interpoliert wie oben anhand der Figuren 2 und 3 beschrieben wurde. Die Algorithmen für diese Rechnungen sollen hier beschrieben werden. Die Recheneinheit 214 rechnet eine "Fast Fourier Transform" unter Verwendung von Algorithmen, die an sich hinreichend bekannt sind und die deshalb hier nicht beschrieben werden.

Algorithmus zur Berechnung der mittleren Geschwindigkeit nach dem Zweifrequenz-Verfahren

Die Dopplersignale in Gleichungen (19)-(22) lassen sich wie folgt als komplexe Signale P(t) ausdrücken:

$$P_1(t) = I_1(t) + jQ_1(t) = (1/2)(\cos\omega_{d1}t + j\sin\omega_{d1}t)$$

7

$$= (1/2)\exp(j\omega_{d1}t) \quad (25)$$

$$P_2(t) = I_2(t) + jQ_2(t) = (1/2)(\cos\omega_{d2}t + j\sin\omega_{d2}t)$$
$$= (1/2)\exp(j\omega_{d2}t) \quad (26)$$

Die Gleichungen (25) und (26) definieren zwei komplexe Zeiger, die mit der Doppler-Kreisfrequenz $\omega_{d1}$ bzw. $\omega_{d2}$ drehen. Um eine der Doppler-Kreisfrequenzen, z.B. $\omega_{d1}$ zu bestimmen, wird die Phasendifferenz des Zeigers an zwei aufeinanderfolgenden Zeitpunkten gemessen und daraus der Wert der Doppler-Kreisfrequenz wie folgt gerechnet:

$$\omega_{d1} = \varphi_1 / \Delta t \quad (27)$$

$\varphi_1$ ist die Phasendifferenz zwischen $P_1(t+\Delta t)$ und $P_1(t)$. Diese Phasendifferenz kann durch eine komplexe Multiplikation bestimmt werden

$$\varphi_1 = \arg[P_1(t + \Delta t)P^*{}_1(t)] , \quad (28)$$

wobei arg [ ] der Winkel der komplexen Zahl bedeutet und $P^*{}_1(t)$ der konjugiert komplexe Wert von $P_1(t)$ ist.

Wegen Rauschen und Schwankungen im Signal, das der zu messenden Geschwindigkeit entspricht, ist der nach Glg. (28) gerechnete Wert von $\varphi_1$ nicht zuverlässig. Die Zuverlässigkeit dieses Wertes kann durch Mittelung verbessert werden. Es hat sich als zweckmässig erwiesen folgenden Vektor zu rechnen

$$P_{1N} = \frac{\underset{N}{\Sigma} \; P_1(t+\Delta t) \; P^*{}_1(t)}{\underset{N}{\Sigma} \; |P_1(t)| \; \bullet \; |P_1(t+\Delta t)|} \quad (29)$$

$\underset{N}{\Sigma}$ bedeutet eine Summation über N Werte.

Durch die Gleichung (29) lässt sich $P_{1N}$ und dadurch $\varphi_1$ wie folgt ermitteln:

$$\varphi_1 = \arg(P_{1N}) \quad (30)$$

Der Zeiger $P_{1N}$ ist normiert, wobei $|P_{1N}|$ im Bereich von gleich oder grösser als 0 bis gleich oder kleiner als 1 liegt, d.h.:

$$0 \leq |P_{1N}| \leq 1 . \quad (31)$$

Die Länge des Zeigers $P_{1N}$ ist ein Mass für die "Qualität" des Signals. Die Zeiger, die bei der Berechnung von $P_{1N}$ berücksichtigt werden, sind in Fig. 6 dargestellt. Falls alle Zeiger, die summiert werden, in der gleichen Richtung liegen, ist $|P_{1N}| = 1$. Falls praktisch reines Rauschen gemessen wird, ist $|P_{1N}| \ll 1$.

Auf analoge Weise lässt sich bei der zweiten Frequenz berechnen

$$P_{2N} = \frac{\underset{N}{\Sigma} P_2(t+\Delta t) \; P^*{}_2(t)}{\underset{N}{\Sigma} |P_2(t)| \cdot |P_2(t+t\Delta t)|} \quad (32)$$

und

$$\varphi_2 = \arg(P_{2N}) \quad (33)$$

Gemäss der Doppler-Gleichung (2) und wenn man dort $\cos\theta=1$ setzt ($\cos\theta=1$ heisst, dass wir die auf die Strahlachse projizierte Geschwindigkeit erhalten), kann man ausserdem schreiben:

$$\varphi_1 = \omega_{d1} . \Delta t = - \omega_1 \Delta t \, 2v/c \quad (34)$$

$$\varphi_2 = \omega_{d2} . \Delta t = - \omega_2 \Delta t \, 2v/c \quad (35)$$

wobei $\omega_1 = 2 \pi f_1$ und $\omega_2 = 2 \pi f_2$.

Durch Subtraktion der Glg. (34) von Glg. (35) erhält man:

$$\Delta\varphi = \varphi_2 - \varphi_1 = -\Delta t(\omega_2 - \omega_1)\, 2\, v_a/c \quad (36)$$

Daraus erhalten wir die mit dem Zweifrequenz-Verfahren ermittelbare Geschwindigkeit durch die Formel:

$$V_a = -\Delta\varphi\cdot c / [2\Delta t(\omega_2 - \omega_1)] \quad (37)$$

Der Wert von $\Delta\varphi$ ist eindeutig über einen Bereich von $\Delta\varphi$ gleich oder grösser als $-\pi$ bis $\Delta\varphi$ gleich oder kleiner als $\pi$, dies entspricht dem Nyquistbereich. Der eindeutige Messbereich von $V_a$ wird erhöht, da $\Delta\varphi$ viel kleiner als $\varphi_1$ und $\varphi_2$ ist.

Die Erfahrung zeigt, dass man gute Ergebnisse erhält, wenn man in Glg. (29) und (32) über 4 bis 8 Werte mittelt, d.h. N kann z.B. die Werte 4 bis 8 annehmen.

Algorithmus zur Interpolation des Dopplersignals

Die Interpolation dient dazu, das Dopplersignal bei einer bestimmten Frequenz so zu modifizieren, dass der eindeutige Messbereich von V erhöht wird. Wie anhand der Figuren 2 und 3 oben beschrieben wird dies dadurch erreicht, dass zwischen Messwerte zusätzliche Werte interpoliert werden. Als Beispiel wird hier die Interpolation eines Wertes zwischen zwei gemessenen Werten des Signals $P_1(t)$ bei der Frequenz $\omega_1$ beschrieben . Das gemessene Signal $P_1(t)$ besteht aus den Werten.

$$P_1(O),\ P_1(\Delta t),\ P_1(2\Delta t),\ P_1(3\Delta t), \quad (38)$$

Durch die Interpolation werden zusätzliche Werte bei $\Delta t/2$, $3\Delta t/2$, $5\Delta t/2$ etc. gerechnet. Nachstehend wird die Berechnung des Wertes $P_1(\Delta t/2)$ beschrieben. Zuerst wird die Phasendifferenz $\varphi_1$ zwischen $P_1(\Delta t)$ und $P_1(0)$ nach Glg. (28) gerechnet. Diese Phase $\varphi_1$ ist eindeutig in einem Bereich von $-\pi$ bis $+\pi$, d.h.:

$$-\pi \le \varphi_1 \le +\pi \quad (39)$$

Als zusätzliche Information wird für die Interpolation der Durchschnittswert $v_a$ der Geschwindigkeit $v_a$ verwendet, der durch das Zweifrequenz-Verfahren, sh. Glg. (37), gerechnet wird. Anhand von $v_a$ lässt sich eine Phase $\varphi_1'$ nach Glg. (34) rechnen

$$\varphi_1' = -\omega_1\,(2V_a/c)\,\Delta t \quad (40)$$

Mit dem Wert $\varphi_1'$ wird geprüft, ob der Wert von $\varphi_1$ tatsächlich im Bereich zwischen $-\pi$ und $+\pi$ liegt. Wenn $|\varphi_1' - \varphi_1| > \pi$ ist, addiert man ein Vielfaches k von $2\pi$ zur Phasendifferenz $\varphi_1$, zwischen $P_1(\Delta t)$ und $P_1(0)$. Es wird dann ein Wert k bestimmt

$$k = \text{round}\,([\,\varphi_1' - \varphi_1\,]\,/\,2\pi \quad (41)$$

wobei round ( ) Rundung auf die nächste ganze Zahl bedeutet. Der Wert $P_1(\Delta t/2)$ wird dann folgendermassen interpoliert:

$$\arg P_1(\Delta t/2)$$
$$= \arg P_1(0) + (1/2)(\varphi_1 + k\cdot 2\pi) \quad (42)$$

$$|P_1(\Delta t/2)|$$
$$= (|P_1(0)| + |P_1(\Delta t)|)/2 \quad (43)$$

Argument und Amplitude des Signals $P_1(\Delta t/2)$ werden dann auf bekannte Weise wieder in die Quadratursignale $I_1(\Delta t/2)$ und $Q_1(\Delta t/2)$ umgewandelt.

Wenn man (m-1) Zwischenwerte zwischen $P_1(0)$ und $P_1(\Delta t)$ interpolieren will, so unterteilt man das Intervall $\Delta t$ in m Abschnitte. Man erhält dann den n-ten interpolierten Wert (mit n<m ) wie folgt

$$\arg P_1(n\Delta t/m)$$
$$= \arg P_1(0) + (l/m)\,n(\varphi_1 + k\cdot 2\pi) \quad (44)$$

$$|P_1(n\Delta t/m)| =$$
$$|(\,|P_1(0)| + (n/m)(|P_1(\Delta t)| - |P_1(0)|))| \quad (45)$$

Die Signalfolge, welche aus Signalen besteht, die den gemessenen Werten bzw. den dazwischen interpolierten Werten entsprechen, wird der Recheneinheit 214 zugeführt, in der eine "Fast Fourier Transform" gerechnet wird.

Als allgemeine Bemerkung soll nochmals wiederholt werden, dass man den Durchschnittwert der Geschwindigkeit aus relativ wenigen Werten ermittelt, typisch sind 4 bis 8 Werte. Die Fourier-Transformation wird hingegen über eine wesentlich höhere Anzahl Werte gerechnet. Es ist also ohne weiteres möglich, dass die mittlere Frequenz und damit der Durchschnittwert der Geschwindigkeit über die Signalfolge ändert, über die die Fourier-Transformation gerechnet wird. Dies bedeutet, dass der Frequenzbereich der Fourier-Transformation grösser sein kann als der ursprüngliche Nyquistbereich. Dies ist ein weiterer Unterschied zu den oben erwähnten "tracking" Verfahren. Diese arbeiten nur, wenn die Bandbreite des Signals kleiner als der ursprüngliche Nyquistbereich ist.

EP 0 458 392 B1

Beschreibung der Vorrichtungen zur Erzeugung der Sendeimpulse

Fig. 7 zeigt das Blockschema einer Doppler-Messvorrichtung zur Messung von Strömungsgeschwindigkeiten eines Fluids 11, das Partikel 12 mitführt, die Ultraschallwellen reflektieren. Das Fluid kann z.B. das durch ein Blutgefäss fliessendes Blut sein. Das Prinzip einer solchen Vorrichtung ist in der deutschen Offenlegungsschrift DE-A-2406630 und in der entsprechenden amerikanischen Patentschrift US-A-3 914 999 beschrieben. Nach diesem bekannten Prinzip wird ein z.B. durch ein Rohr 13 fliessendes Fluid 11 mit wenigstens zwei aufeinanderfolgenden, von einem Wandler 14 abgegebenen Ultraschallimpulsen bestrahlt, die um die entsprechende Dopplerfrequenz verschobenen Echos von Reflektoren (z.B. Partikeln) im Fluid entlang des Ultraschallstrahl werden mit demselben Wandler 14 empfangen, und aus den Phasenunterschieden zwischen Echos gleicher Laufzeit vom ersten und zweiten gesendeten Ultraschallimpuls wird durch geeignete Signalverarbeitung in einer Auswerteeinheit 18 ein Ausgangssignal erzeugt, dessen zeitlicher Verlauf dem Geschwindigkeitsprofil des Fluids im untersuchten Querschnitt entspricht.

Die Vorrichtung enthält einen Ultraschallwandler 14, einen Sender 15, einen Empfänger 16, eine zentrale Steuereinheit 17 und eine Auswerteeinheit 18.

In der durch die gestrichelte Gerade 7 gezeigten Richtung bestrahlt der Ultraschallwandler 14 das Fluid 11 mit Ultraschallwellenimpulsen im Ansprechen auf entsprechende Sendeimpulse, die ihm mit einer vorgegebenen Impulswiederholungsfrequenz zugeführt werden. Der Wandler 14 empfängt ausserdem die von Partikeln im Fluid reflektierten Echowellen und gibt entsprechende Echosignale ab. Der Wandler 14 ist z.B. ein Ultraschallwandler mit folgenden technischen Daten:
- Die Sendefrequenz soll vorzugsweise um ca. 3,0 MHz liegen
- Resonanzfrequenz der Keramik: 3,2 MHz
- Durchmesser der kreisförmigen Keramik: 13 mm
- Krümmungsradius der Keramik: 120 mm
- Abstand zwischen dem Wandler und der Grenze Nahfeld/Fernfeld: 88 mm.

Der Sender 15 ist mit dem Ultraschallwandler 14 verbunden und dient zur Erzeugung von Sendeimpulsen, mit denen der Ultraschallwandler zur Abgabe der Ultraschallwellenimpulse angeregt wird.

Im Empfänger 16, der ebenfalls mit dem Wandler 14 verbunden ist, werden Echosignale verarbeitet, die wenigstens zwei Gruppen von Echowellen entsprechen, die von Partikeln im Fluid im Ansprechen auf einen ersten und einen zweiten gesendeten Wellenimpuls reflektiert werden. Benachbarte aber voneinander getrennte Frequenzbänder der Echosignale werden im Empfänger 16 in je einem separaten Signalverarbeitungspfad 21 bzw. 22 verarbeitet.

Mit der Auswerteeinheit 18, die mit den Ausgängen des Empfängers 16 verbunden ist, wird aus der mit dem Empfänger gewonnenen Dopplerinformation wenigstens ein Ausgangssignal abgeleitet, das Information über die Strömungsgeschwindigkeit enthält.

Die zentrale Steuereinheit 17 (master timing unit) erzeugt alle Steuer- und Taktsignale, die für eine programmierbare Betriebsart der Doppler-Vorrichtung notwendig sind. Die Steuereinheit 17 ist daher im wesentlichen ein programmierbarer digitaler Signalgenerator. Die wichtigsten Funktionen der zentralen Steuereinheit 17 sind wie folgt:
- Sie steuert den Sender 15, indem sie den Zeitpunkt und die Dauer der Sendeimpulse bestimmt.
- Sie liefert sämtliche Taktsignale für den Empfänger 16. Sie steuert damit den Signalfluss durch den Empfänger.
- Sie liefert die Taktsignale für die Auswerteeinheit 18 und steuert damit den Signalfluss durch diese Einheit.

Erfindungsgemäss ist der Sender 15 so eingerichtet, dass das Frequenzspektrum der damit erzeugten, periodischen Folge von Sendeimpulsen aus zwei benachbarten, aber voneinander getrennten Frequenzbändern 31 bzw. 32 besteht, die in Fig. 8 dargestellt sind. Da die Sendeimpulse mit der Impulswiederholungsfrequenz PRF periodisch gesendet werden, besteht das Frequenzspektrum des Sendesignals aus einem Frequenzlinienraster mit einem Rasterabstand von PRF. Durch die Form oder Gestaltung des Frequenzspektrums des Sendesignals wird erreicht, dass der grösste Teil der gesendeten Energie um zwei Frequenzen $f_1$ bzw. $f_2$ in diesen Frequenzbändern konzentriert wird.

Die Frequenzbänder 31 bzw. 32 liegen so nahe bei einander, dass sie vom gleichen Ultraschallwandler abgestrahlt werden können und etwa die gleichen Gewebsdämpfungen erfahren. Die Frequenzen $f_0$, $f_1$, $f_2$ haben z.B. folgende Werte: $f_0 = 3,2$ MHz, $f_1 = 2,95$ MHz und $f_2 = 3,45$ MHz.

Vorzugsweise wird der grösste Teil der gesendeten Energie in zwei benachbarten Frequenzbändern 33 bzw. 34 konzentriert, wobei die Trägerfrequenz $f_0$ die Grenze zwischen diesen Bändern definiert, und wobei $f_1$ die Mittenfrequenz des Frequenzbandes 33 und $f_2$ die Mittenfrequenz des Frequenzbandes 34 ist.

Der Abstand zwischen den Frequenzen $f_1$ und $f_2$ wird als Frequenzintervall $\Delta f$ definiert. Wegen der sym-

**10**

metrischen Anordnung von $f_1$ und $f_2$ in Bezug auf $f_0$ gilt $f_2 - f_0 = f_0 - f_1 = \Delta f / 2$.

Fig. 9 zeigt ein Beispiel von zwei aufeinanderfolgenden Sendeimpulsen 35 bzw. 36. Die gesendete Folge solcher Sendeimpulse hat ein Sendespektrum gemäss Fig. 8. Jeder der Sendeimpulse 35 bzw. 36 besteht zum grössten Teil aus einem Rechtecksignal der Frequenz $f_0$, sodass die Periode einer Schwingung des Rechtecksignals mit der Periode $T_o = 1 / f_0$ beträgt. Die Dauer eines Sendeimpulses ist $T_p$ und beträgt z.B. $T_p = 6$ Mikrosekunden. Der Abstand $T_r$ zwischen aufeinanderfolgenden Sendeimpulsen beträgt z.B. 250 Mikrosekunden, was einer Impulswiederholungsfrequenz PRF = 4 kHz entspricht. Die dem Wandler zugeführten Sendeimpulse haben z.B. eine Spannung die zwischen 50 und 100 Volt liegt.

Wie aus der Fig. 9 ersichtlich weicht jeder Sendeimpuls von einem periodischen Rechtecksignal dadurch ab, dass das Signal in de Mitte eine Stelle 37 aufweist, bei der eine Phasenumkehrung stattfindet. Diese Phasenumkehrung ist notwendig, damit die periodische Folge von Sendeimpulsen das Frequenzspektrum gemäss Fig. 8 hat.

Figuren 15 und 16 zeigen zwei weitere Beispiele von Sendeimpulsen. Der Sendeimpuls gemäss Fig. 15 setzt sich aus drei Sendeimpulselementen zusammen, wobei jedes Element den Verlauf des Sendeimpulses 35 gemäss Fig. 9 hat. Der Sendeimpuls gemäss Fig. 16 enthält zwei ganze Sendeimpulselemente mit dem Verlauf des Sendeimpulses 35 gemäss Fig. 9 und am Anfang und am Ende Teile eines solchen Sendeimpulselementes.

Da der Sendeimpuls gemäss Fig. 16 etwas weniger als drei ganze Sendeimpulselemente enthält, ist seine Dauer etwas kürzer als die Dauer des Sendeimpulses gemäss Fig. 15. Wie aus Fig. 16 ersichtlich, kann der Sendeimpuls bei einer beliebigen Flanke eines Sendeimpulselementes beginnen.

Die Sendeimpulse gemäss Fig. 15 und 16 enthalten Phasenumkehrstellen 181-185, wobei jede der Phasenumkehrstellen 181, 183, 185 der Phasenumkehrstelle 37 in Fig. 9 entspricht, während die Phasenumkehrstellen 182 und 184 durch die Zusammenfügung von zwei Signalimpulselementen entstehen. In der praktischen Realisierung werden die Sendeimpulse durch zeitliche Segmentierung eines an sich kontinuierlichen Signals erzeugt, der periodisch verteilte Phasenumkehrstellen hat.

Fig. 17 zeigt eine schematische Darstellung des Frequenzspektrums einer Folge von Sendeimpulsen, die die in Fig. 15 oder Fig. 16 gezeigte Wellenform haben. Zur Vereinfachung der Darstellung ist in Fig. 17 lediglich die Hüllkurve des Frequenzlinienrasters dargestellt, der wie in der Fig. 8 das Frequenzspektrum bildet. Aus einem Vergleich des Sendespektrums gemäss Fig. 8 für eine Folge von Sendeimpulsen, die je nur ein Sendeimpulselement enthalten, mit dem Frequenzspektrum gemäss Fig. 17 für eine Folge von Sendeimpulsen, die je mehrere Sendeimpulseelementen enthalten, ist es ersichtlich, dass durch die Verwendung der letztgenannten Sendeimpulsen gemäss Fig. 15 und 16 eine stärkere Konzentration der Energie der gesendeten Ultraschallwellen in schmäleren Frequenzbändern um die Frequenzen $f_1$ und $f_2$ erzielbar ist, wobei der Abstand $\Delta f$ gleich wie in Fig. 8 ist.

Wie in Fig. 8 wird in Fig. 17 mit $\Delta f$ den Abstand zwischen $f_1$ und $f_2$ bezeichnet.

Wie in Fig. 15 gezeigt, wird die Periode der Phasenumkehrstellen, d.h. der Zeitintervall zwischen gleichartigen Phasenumkehrstellen, mit $T_u$ bezeichnet, wobei $T_u = 2/\Delta f$. Dies gilt auch für den Sendeimpuls gemäss Fig. 16.

Innerhalb eines Sendeimpulses gemäss Fig. 15 oder Fig. 16 müssen die Phasenumkehrstellen in regelmässigen Zeitintervallen $T_e = T_u / 2$ liegen.

Wenn das Sendesignal aus einer Folge von Sendeimpulsen der Dauer $T_p$ besteht, und $T_p$ -wie in den Fig. 15 und 16- viel grösser als $T_u$ ist, ist die Lage des Beginns des Sendeimpulses und dessen Ende in Bezug auf die Lage der in ihm enthaltenen Phasenumkehrstellen nicht zwingend.

Die Dauer $T_p$ des Sendeimpulses ist vorzugsweise grösser als die Periode $T_u$ der Phasenumkehrstellen. Um das Spektrum des Sendesignals gemäss Fig. 8 zu gewährleisten, muss $T_p$ grösser als $T_u$ gewählt werden. Je grösser $T_p$ gegenüber $T_u$ ist, desto stärker ist die Konzentration der gesendeten Energie um die Seitenbandmittenfrequenzen $f_1$ und $f_2$ im Frequenzspektrum des Sendesignals.

Fig. 10 zeigt eine erste Ausführungsform des Senders 15 in Fig. 7. Diese Ausführungsform besteht hauptsächlich aus digitalen Bausteinen. Die Senderschaltung gemäss Fig. 10 enthält ein Steuerungs-Interface 41, eine Steuereinheit 42, zwei Schieberegister 43 bzw. 44 und einen Leistungsverstärker 45 dessen Ausgang mit dem Ultraschallwandler 14 in Fig. 7 verbunden ist. Mit der Schaltung gemäss Fig. 10 werden Sendeimpulse gemäss Fig. 9 erzeugt, wobei die gesendete periodische Folge von Sendeimpulsen das Frequenzspektrum gemäss Fig. 8 hat.

Die erforderlichen Signale werden dem Steuerung-Interface 41 über Leitungen 39,56,51, einen Adressenbus 46 und einen Datenbus 47 zugeführt. Das Interface 41 ist mi t den Registern 43 bzw. 44 über Leitungen 48 bzw. 49 verbunden. Die Ausgänge der Register 43 bzw. 44 sind mit je einem Eingang des Leistungsverstärkers 45 verbunden. Die Steuereinheit 42 ist über Leitungen 51, 52 und 53 mit der zentralen Steuereinheit 17 in Fig. 7 verbunden. Die Steuereinheit 42 ist ausserdem über eine Leitung 56 mit dem Interface 41 und über Leitungen 54 bzw. 55 mit den Registern 43 bzw. 44 verbunden.

Die Register 43 und 44 haben den gleichen Aufbau und korrespondierende Anschlüsse. Diese Register werden aber mit verschiedenen aber komplementären Bytes geladen.

Die Fig. 11 zeigt eine schematische Darstellung des Registers 43 in Fig. 10. Wie in Fig. 11 gezeigt, werden in diesem Register 4 Bytes (Wörter) 65, 66, 67 und 68 über entsprechende Busleitungen 61, 62, 63 und 64 in das Register 43 geladen. Der Inhalt dieser Bytes ist in den Speicherzellen des Registers 43 in Fig. 11 dargestellt.

Wie aus Fig. 10 ersichtlich hat jedes der Register 43 bzw. 44 eine Rückführung von seinem Ausgang zu seinem Eingang. Wie nachstehend näher beschrieben wird, ist dies für die zweckmässige Funkstionsweise der Senderschaltung gemäss Fig. 10 von Bedeutung. Ebenfalls wichtig ist, dass die Inhalte der Register 43 und 44 komplementär sind, d.h. z.B. dass 101010... im Register 43 und 010101... im Register 44 gespeichert wird.

Die Funktionsweise der Senderschaltung gemäss Fig. 10 und 11 wird nun anhand der Signaldiagramme gemäss Fig. 12 erläutert:

Das Steuerung-Interface 41 dient zur Programmierung der Steuereinheit 42 und der Schieberegister 43 und 44. Hierfür erhält das Interface 41 über Busse 46, 47 Adressen bzw. Daten und über die Leitung 39 das zugehörige Strobesignal 72 in Fig. 12 vom dekodierten Mikroprocessor Bus des Hauptsystems gemäss Fig. 7. Das Signal 72 ist ein Taktsignal, das das Laden der vorgesehenen Bytes in die Register 43 bzw. 44 bewirkt. Für die Steuerung des Ladens der vorgesehenen Bytes in den Registern 43 bzw. 44 erhält das Interface 41 über Leitungen 51, 56 ein weiteres Signal 71. Das Laden der vorgesehenen Bytes ist nur in dem Zeitintervall 171 möglich, in dem das Signal 71 den gezeigten Zustand hat. Zur Steuerung des Ladens der vorgesehenen Bytes in den Registern 43 bzw. 44 wird in der Steuereinheit 42 im Ansprechen auf das Signal 71 ein weiteres Signal 73 erzeugt, das den Registern über Leitungen 54 bzw. 55 zugeführt wird. Ueber die Leitung 52 erhält die Steuereinheit 42 ausserdem ein Taktsignal von der zentralen Steuereinheit 17 in Fig. 7. Im Ansprechen auf dieses Taktsignal erzeugt die Steuereinheit 42 ein korrespondierendes Taktsignal 74, das den Registern 43 bzw. 44 über die Leitungen 54 bzw. 55 zugeführt wird.

Wie in Fig. 12 gezeigt erstreckt sich das für das Laden der Register 43 bzw. 44 vorgesehene Intervall 171 zwischen den Zeitpunkten 172 und 173, bei denen jeweils eine Aenderung des Zustands der Signale 71 und 73 eintritt. Nach dem Zeitintervall 171 beginnt mit der nächsten Vorderflanke des Taktsignals 74 zum Zeitpunkt 174 ein Schiebevorgang bei den Registern 43 bzw. 44. Durch diesen vom Taktsignal 74 bewirkten Schiebevorgang werden an den Ausgängen der Register 43 bzw. 44 je ein Ausgangssignal 76 bzw. 77 erzeugt. Mit dem Leistungsverstärker 45 in Fig. 10 wird die Differenz dieser Ausgangssignale 76 und 77 gebildet und auf diese Weise ein Sendeimpuls 78 erzeugt, der den gewünschten Verlauf gemäss Fig. 9 hat.

Wie in Fig. 12 dargestellt, erstreckt sich der Schiebevorgang in den Registern 43 bzw. 44 über ein Zeitintervall 176, das vom Zeitpunkt 174 bis zu einem Zeitpunkt 175 dauert. Die Dauer des Zeitintervalls 176 und somit die Dauer des Sendeimpulses 78 wird durch einen in der Steuereinheit 42 enthaltenen Zähler festgelegt, der zum Zeitpunkt 175 eine Aenderung eines Signals 75 bewirkt, das das Ende des Sendeimpulses 78 markiert. Das Signal 75 wird über eine Leitung 53 von der Steuereinheit 42 zur zentralen Steuereinheit 17 in Fig. 7 übertragen.

Die Register 43 bzw. 44 sind Schieberegister mit der in Fig. 11 für das Register 43 gezeigten Struktur. Wie dort gezeigt, hat jedes dieser Register 4x8 Speicherzellen für je ein Byte und werden durch das Interface 41 mit 4 Bytes zu je 8 Bit geladen. Wie oben bereits beschrieben, wird anschliessend das 32 Bit lange Muster (Sendemuster) an einen Eingang des Leistungsverstärkers 45 geschoben. Durch die Rückführung des Ausgangs an den Eingang des Registers ist es möglich, den Schiebevorgang beliebig lange durchzuführen.

Die soeben beschriebene Senderschaltung gemäss Fig. 10 wird bevorzugt, weil sie vorwiegend aus relativ billigen digitalen Bausteinen besteht, und weil sie durch relativ leichte Veränderungen der Betriebsparameter eine flexiblere Gestaltung des Frequenzspektrums der Sendeimpulse ermöglicht. Zur Erzeugung der Sendeimpulse kann jedoch anstelle der Senderschaltung gemäss Fig. 10 eine Senderschaltung gemäss Fig. 13 verwendet werden, die im wesentlichen aus einem AM-Modulator, einem elektronischen Schalter und einem Leistungsverstärker besteht.

Die Sendeschaltung gemäss Fig. 13 enthält folgende analoge Funktionsblöcke: einen Trägerfrequenzoszillator 81, der ein Trägersignal der Frequenz $f_0$ erzeugt, einen Modulationsfrequenz Oszillator 82, der ein Modulationssignal mit der Frequenz $f_m = \Delta f/2$ erzeugt, wobei im vorliegenden Beispiel $f_m = 250$ kHz ist. Die Senderschaltung gemäss Fig. 13 enthält einen Multiplizierer 83, eine steuerbare, elektronische Torschaltung 84 und einen Leistungsverstärker 85, dessen Ausgang mit dem Ultraschallwandler 14 in Fig. 7 verbunden ist. Mit dem Multiplizierer 83 wird das vom Oszillator 81 gelieferte Trägersignal mit dem vom Oszillator 82 erzeugten Modulationssignal multipliziert um ein Ausgangssignal zu erzeugen, das in Fig. 14 dargestellt ist. Wie aus Fig. 14 ersichtlich, ist das auf diese Weise erzeugte, amplitudenmodulierte Signal das Ergebnis einer durchaus konventionellen AM-Modulation. Dieses amplitudenmodulierte Signal wird über eine Leitung 86 einem Eingang der Torschaltung 84 zugeführt. Ein Impuls 88 der von der zentralen Steuereinheit 17 in Fig. 7 geliefert wird, wird über eine Leitung 87 einen zweiten Eingang der Torschaltung zugeführt um das amplitudenmodulierte Signal am Eingang der Torschaltung 84 über bestimmte Zeitintervalle durchzulassen. Auf diese Weise werden Sendeimpulse erzeugt, die nach einer Verstärkung im Leistungsverstärker 85 dem Ultraschallwandler 14 zugeführt werden. Die Dauer des Impulses 88 in Fig. 13 bestimmt die Dauer des Sendeimpulses.

Es ist aus Fig. 14 ersichtlich, dass die durch die Amplitudenmodulation erzeugte Wellenform am Eingang der Torschaltung 84 periodische Phasenumkehrstellen 89 aufweist. Durch geeignete zeitliche Beziehungen zwischen dem Impuls 88 in Fig. 13 und den von den Oszillatoren 81 bzw. 82 gelieferten Signalen wird erreicht, dass die erzeugten Sendeimpulse am Ausgang der Torschaltung 84 eine solche Phasenumkehrstelle 89 enthalten. Auf diese Weise wird sichergestellt (wie im Fall der Sendeimpulse gemäss Fig. 9), dass die dem Ultraschallwandler zugeführten Sendeimpulse ein Frequenzspektrum gemäss Fig. 8 haben.


## Patentansprüche

1. Doppler-Messvorrichtung zur Messung der Strömungsgeschwindigkeit eines Fluids, das Partikel mitführt, die Ultraschallwellen reflektieren, welche Vorrichtung folgende Teile enthält:

   a) einen Ultraschallwandler zum Bestrahlen des Fluids mit Ultraschallwellenimpulsen im Ansprechen auf entsprechende Sendeimpulse, die ihm mit einer vorgegebenen Impulswiederholungsfrequenz zugeführt werden, zum Empfangen der von Partikeln im Fluid reflektierten Echowellen, und zur Abgabe entsprechender Echosignale,

   b) einen mit dem Ultraschallwandler verbundenen Sender zur Erzeugung von Sendeimpulsen, mit denen der Ultraschallwandler zur Abgabe der Ultraschallwellenimpulse angeregt wird,

   c) einen mit dem Ultraschallwandler verbundenen Empfänger für den Empfang und Verarbeitung von Echosignalen, die wenigstens zwei verschiedenen Echowellen entsprechen, die von Partikeln in einem bestimmten Punkt des Flussweges im Ansprechen auf einen ersten und einen zweiten gesendeten Wellenimpuls reflektiert werden, wobei benachbarte aber voneinander getrennte Frequenzbänder der Echosignale in je einem separaten Signalverarbeitungspfad verarbeitet werden,

   d) eine mit dem Ausgang des Empfängers verbundene Auswerteeinheit, mit der aus der mit dem Empfänger gewonnenen Dopplerinformation ein Ausgangssignal abgeleitet wird, das der Strömungsgeschwindigkeit entspricht,

   e) wobei der Empfänger folgende Mittel enthält:

   e.1) in jedem der Signalverarbeitungspfade enthaltene Mittel zur Durchführung von einer Quadraturdemodulation der vom Ultraschallwandler empfangenen Echosignale in jedem der Frequenzbänder, wobei am Ausgang jedes der Signalverarbeitungspfade je ein Paar Quadratursignale erzeugbar sind, die jeweils einen gemessenen komplexen Wert definieren ($P(0)$, $P(\Delta t)$, $P(2 \Delta t)$, ...),

   e.2) Mittel zur Verarbeitung der Quadratursignale aus beiden Signalpfaden, wobei mit diesen Mitteln ein erstes Ausgangsignal erzeugbar ist, das einem Durchschnittswert der Strömungsgeschwindigkeit im untersuchten Punkt des Flussweges entspricht,

   dadurch gekennzeichnet, dass der Empfänger weiters enthält :

   e.3) Mittel zur Verknüpfung des ersten Ausgangssignals mit Quadratursignalen am Ausgang eines der Signalverarbeitungspfade, wobei durch diese Verknüpfung interpolierte Signale erzeugbar sind, die gerechnete komplexe Werte ($P(\Delta t/2)$, $P(3 \Delta t/2)$, ...) definieren, die mit dem ermittelten Durchschnittswert der Strömungsgeschwindigkeit und mit den gemessenen Messwerten konsistent sind, und

   daß die Auswerteeinheit weiters enthält :

   f) Mittel zur Auswertung einer Signalfolge, die sich aus den Signalen zusammensetzt, die den gemessenen und den errechneten komplexen Werte entsprechen ($P(0)$, $P(\Delta t/2)$, $P(\Delta t)$, $P(3 \Delta t/2)$, $P(2 \Delta t)$, ...), wobei durch diese Auswertung Information über den momentanen Wert der Strömungsgeschwindigkeit gewonnen wird.

2. Doppler-Messvorrichtung gemäss Anspruch 1, dadurch gekennzeichnet, dass der Sender so eingerichtet ist, dass das Frequenzspektrum der periodischen Folge von Sendeimpulsen aus zwei benachbarten, aber voneinander getrennten Frequenzbändern besteht.

3. Doppler-Messvorrichtung gemäss Anspruch 1, dadurch gekennzeichnet, dass der Sender Mittel zur Durchführung einer Analyse einer Signalfolge enthält, die sich aus den Signalen zusammensetzt, die den gemessenen und den errechneten komplexen Werte entsprechen ($P(0)$, $P(\Delta t/2)$, $P(\Delta t)$, $P(3 \Delta t/2)$, $P(2$

$\Delta$t), ...), wobei durch diese Analyse ein zweites Ausgangsignal erzeugt wird, dessen Amplitude der Phasenänderung eines Zeigers, der durch die Signale der Signalfolge definiert ist, und dadurch dem momentanen Wert der Strömungsgeschwindigkeit entspricht.

4. Doppler-Messvorrichtung gemäss Anspruch 1, dadurch gekennzeichnet, dass die Signale der Signalfolge, die sich aus den Signalen zusammensetzt, die den gemessenen und den errechneten Werte entsprechen, untereinander kürzere zeitliche Abstände als die Signale aufweisen, die den gemessenen Werten entsprechen.

5. Doppler-Messvorrichtung gemäss Anspruch 1, dadurch gekennzeichnet, dass die Mittel zur Durchführung einer Analyse der Phasenänderung des Zeigers Mittel zur Durchführung einer Fourier Transformation enthalten.

6. Doppler-Vorrichtung gemäss Anspruch 1, dadurch gekennzeichnet, dass die Mittel zur Erzeugung des ersten Ausgangssignals, Mittel zur Berechnung eines Durchschnittswerts der Strömungsgeschwindigkeit anhand der in 4 bis 8 Echosignalen enthaltenen Information enthalten.

7. Doppler-Vorrichtung gemäss Anspruch 5, dadurch gekennzeichnet, dass die Mittel zur Durchführung einer Fourier Transformation so ausgebildet sind, dass bei der Durchführung der Fourier Transformation Information berücksichtigt wird, die in einer Anzahl von Echosignalen enthalten ist, die grösser als die Anzahl der Echosignale ist, deren Informationsgehalt für die Berechnung des Durchschnittswertes der Strömungsgeschwindigkeit berücksichtigt wird.

8. Doppler-Messvorrichtung gemäss Anspruch 1, dadurch gekennzeichnet, dass sie Mittel zur akustischen Widergabe der Signalfolge enthält.

9. Doppler-Messvorrichtung gemäss Anspruch 1, dadurch gekennzeichnet, dass sie Mittel enthält, mit denen ein gerechneter Wert zwischen zwei aufeinanderfolgenden gemessenen Werten gewonnen werden kann, wobei der gerechnete Wert durch Interpolation der gemessenen Werte berechenbar ist.

10. Doppler-Messvorrichtung gemäss Anspruch 1, dadurch gekennzeichnet, dass sie Mittel enthält, mit denen mehrere gerechnete Werte zwischen zwei aufeinanderfolgenden gemessenen Werten gewonnen werden können, wobei die gerechneten Werte durch Interpolation der gemessenen Werte berechenbar sind.

## Claims

1. Doppler measuring device to measure the flow speed of a fluid carrying particles which reflect ultrasound waves, where the said device contains the following parts:

   a) an ultrasound converter for irradiating the fluid with ultrasound wave pulses in response to corresponding transmit pulses passed to it at a specific pulse repetition frequency, for receiving the echo waves reflected by the particles in the fluid, and for emitting corresponding echo signals,

   b) a transmitter connected with the ultrasound converter to generate the transmit pulses with which the ultrasound converter is stimulated to emit the ultrasound wave pulses,

   c) a receiver connected to the ultrasound converter for receiving and processing echo signals which correspond at least to two different echo waves, which are reflected by particles in a specific point of the flow path in response to a first and a second transmitted wave pulse, where adjacent but separate frequency bands of the echo signals are processed in separate signal processing paths,

   d) an evaluation unit connected to the output of the receiver with which the Doppler information obtained from the receiver can be used to derive an output signal corresponding to the flow speed,

   e) where the receiver contains the following means:

   e.1) in each of the signal processing paths, means for performing quadrature demodulation of the echo signals received by the ultrasound converter in each of the frequency bands, where at the output of each of the signal processing paths a pair of quadrature signals can be generated which define a measured complex value (P(0), P($\Delta$t), P(2 $\Delta$t) ...),

   e.2) means for processing the quadrature signals from the two signal paths, where with these means a first output signal can be generated which corresponds to a mean value of the flow speed at the point tested of the flow path, characterised in that the receiver also contains:

e.3) means for linking the first output signal with quadrature signals at the output of one of the signal processing paths, where this linking leads to the generation of interpolated signals which define calculated complex values (P($\Delta t/2$), P(3 $\Delta t/2$)) consistent with the average value determined for the flow speed and the measurement values measured,

and that the evaluation unit also contains:

f) means for evaluation of a signal sequence comprising the signals which correspond to the measured and calculated complex values (P(0), P($\Delta t/2$), P($\Delta t$), P(3 $\Delta t/2$), P(2 $\Delta t$), ....) where this evaluation provides information on the instantaneous value of the flow speed.

2. Doppler measuring device according to Claim 1, characterised in that the transmitter is arranged such that the frequency spectrum of the periodic sequence of transmit pulses consists of two adjacent but separate frequency bands.

3. Doppler measuring device according to Claim 1, characterised in that the transmitter contains means for performing an analysis of a signal sequence comprising the signals corresponding to the measured and calculated complex values (P(0), P($\Delta t/2$), P($\Delta t$), P(3 $\Delta t/2$), P(2 $\Delta t$), ...) where this analysis generates a second output signal, the amplitude of which corresponds to the phase change of an indicator defined by the signals of the signal sequence and hence to the instantaneous value of the flow speed.

4. Doppler measuring device according to Claim 1, characterised in that the signals of the signal sequence comprising the signals corresponding to the measured and calculated values have shorter mutual time intervals than the signals which correspond to the measured values.

5. Doppler measuring device according to Claim 1, characterised in that the means for performing an analysis of the phase change of the indicator contains means for the performance of a Fourier transformation.

6. Doppler device according to Claim 1, characterised in that the means for generating for first output signal contain means for calculating a mean value of the flow speed using the information contained in 4 to 8 echo signals.

7. Doppler device according to Claim 5, characterised in that the means of performing a Fourier transformation are designed such that on performance of the Fourier transformation, information is taken into account which is contained in a number of echo signals which is greater than the number of echo signals whose information content is used for calculating the mean value of the flow speed.

8. Doppler measuring device according to Claim 1, characterised in that it contains means for acoustic reproduction of the signal sequence.

9. Doppler measuring device according to Claim 1, characterised in that it contains means with which a calculated value can be obtained between two successive measured values, where the calculated value can be calculated by interpolation of the measured values.

10. Doppler measuring device according to Claim 1, characterised in that it contains means with which several calculated values can be obtained between two successive measured values, where the calculated values can be calculated by interpolation of the measured values.

**Revendications**

1. Dispositif de mesure Doppler pour la mesure de la vitesse d'écoulement d'un fluide, qui entraîne des particules qui réfléchissent les ondes ultrasonores, lequel dispositif contient les éléments suivants :

a) un transducteur à ultrasons pour irradier le fluide avec des impulsions d'ondes ultrasonores en réponse à des impulsions d'émission correspondantes, qui lui sont envoyées avec une fréquence prédéterminée de répétition des impulsions, pour la réception des ondes d'échos réfléchies par des particules situées dans le fluide et pour la délivrance de signaux d'échos correspondants,

b) un émetteur relié au transducteur à ultrasons pour la production d'impulsions d'émission, à l'aide desquelles le transducteur à ultrasons est excité pour la délivrance des impulsions d'ondes ultrasonores,

c) un récepteur relié au transducteur à ultrasons pour la réception et le traitement de signaux d'échos, qui correspondent au moins à deux ondes d'échos différentes qui sont réfléchies par des particules en un point déterminé du trajet du flux en réponse à des première et seconde impulsions d'ondes émises, des bandes de fréquences, qui sont voisines mais séparées l'une de l'autre, des signaux d'échos étant traitées dans des voies respectives séparées de traitement des signaux,

d) une unité d'évaluation, qui est reliée à la sortie du récepteur et au moyen de laquelle est dérivé, à partir de l'information Doppler obtenue avec le récepteur, un signal de sortie, qui correspond à la vitesse de circulation,

e) le récepteur contenant les moyens suivants :

e.1) dans chacun des moyens contenant des voies de traitement de signaux, pour la mise en oeuvre d'une démodulation en quadrature des signaux d'échos reçus par le transducteur à ultrasons dans chacune des bandes de fréquence, auquel cas à la sortie de chacune des voies de traitement des signaux peuvent être produits respectivement des couples de signaux en quadrature, qui définissent respectivement une valeur complexe mesurée (P(0), P($\Delta$t), P(2 $\delta$t), ...),

e.2) des moyens pour traiter des signaux en quadrature provenant des deux voies de transmission de signaux, ces moyens permettant de produire un signal de sortie qui correspond à une valeur moyenne de la vitesse de circulation au point recherché du trajet du flux,

caractérisé en ce que le récepteur contient en outre :

e.3) des moyens pour combiner les premiers signaux de sortie avec des signaux en quadrature à la sortie de l'une des voies de traitement de signaux, cette combinaison permettant d'obtenir des signaux interpolés, qui définissent des valeurs complexes calculées (P($\Delta$t/2), P(3 $\Delta$t/2), ...), qui sont compatibles avec la valeur moyenne déterminée de la vitesse d'écoulement et avec les valeurs de mesure mesurées, et

que l'unité d'évaluation contient en outre :

f) des moyens pour évaluer une suite de signaux, qui se compose des signaux qui correspondent aux valeurs complexes mesurées et calculées (P(0), P($\Delta$t/2), P($\Delta$t), P(3 $\Delta$t/2), P(2 $\Delta$t), ...), cette évaluation permettant d'obtenir une information concernant la valeur instantanée de la vitesse d'écoulement.

2. Dispositif de mesure Doppler selon la revendication 1, caractérisé en ce que l'émetteur est agencé de telle sorte que le spectre des fréquences de la suite périodique d'impulsions d'émission est constituée de deux bandes de fréquences, qui sont voisines mais séparées l'une de l'autre.

3. Dispositif de mesure Doppler selon la revendication 1, caractérisé en ce que l'émetteur contient des moyens pour exécuter une analyse d'une suite de signaux, qui se compose des signaux qui correspondent aux valeurs complexes mesurées et calculées (P(0), P($\Delta$t/2), P($\Delta$t), P(3 $\Delta$t/2), P(2 $\Delta$t), ...), cette analyse permettant d'obtenri un second signal de sortie, dont l'amplitude correspond à la variation de phase d'un vecteur, qui est défini par les signaux de la suite de signaux, et par conséquent à la valeur instantanée de la vitesse d'écoulement.

4. Dispositif Doppler selon la revendication 1, caractérisé en ce que les signaux de la suite de signaux, qui est constituée par les signaux qui correspondent aux valeurs mesurées et calculées, sont séparés les uns des autres par des intervalles de temps plus faibles que ne le sont les signaux qui correspondent aux valeurs mesurées.

5. Dispositif Doppler selon la revendication 1, caractérisé en ce que les moyens pour l'exécution d'une analyse de la variation de phase du vecteur contiennent des moyens pour exécuter une transformation de Fourier.

6. Dispositif Doppler selon la revendication 1, caractérisé en ce que les moyens pour produire le premier signal de sortie contiennent des moyens pour calculer une valeur moyenne de la vitesse d'écoulement en référence à l'information contenue dans 4 à 8 signaux d'échos.

7. Dispositif Doppler selon la revendication 5, caractérisé en ce que les moyens pour l'exécution d'une transformation de Fourier sont agencés de telle sorte que, lors de l'exécution de la transformation de Fourier, on tient compte d'une information qui est contenue dans un nombre de signaux d'échos, qui est supérieur au nombre de signaux d'échos, dont le contenu en informations est pris en compte pour le calcul de la valeur moyenne de la vitesse d'écoulement.

8. Dispositif Doppler selon la revendication 1, caractérisé en ce qu'il contient des moyens pour réaliser la reproduction acoustique de la suite de signaux.

9. Dispositif Doppler selon la revendication 1, caractérisé en ce qu'il contient des moyens à l'aide desquels on peut obtenir une valeur calculée entre deux valeurs successives mesurées, la valeur calculée pouvant être calculée par interpolation des valeurs mesurées.

10. Dispositif Doppler selon la revendication 1, caractérisé en ce qu'il contient des moyens, à l'aide desquels plusieurs valeurs calculées peuvent être obtenues entre deux valeurs mesurées successives, les valeurs calculées pouvant être calculées par interpolation des valeurs mesurées.

*Fig. 1*

P (0)

P (Δt)

P (2Δt)

P (3Δt)

*t*

*Fig. 2*

P (Δt/2)

P (0)

P (Δt)

P (3Δt/2)

P (2Δt)

P (5Δt/2)

P (3Δt)

*t*

*Fig. 3*

Fig. 4

Fig. 5

Fig. 6

Fig. 7

EP 0 458 392 B1

Fig. 8

EP 0 458 392 B1

Fig. 9

Fig. 10

EP 0 458 392 B1

EP 0 458 392 B1

61 62 63 64

65 66 67 68

57

58

43

1 0 1 0 1 0 1 0 0 1 0 1 0 1 0 1 1 0 1 0 1 0 1 0 1 0 0 1 0 1 0 1 0 1

Fig. 11

Fig. 12

EP 0 458 392 B1

Fig. 13

Fig. 14

Fig. 15

Fig. 16

EP 0 458 392 B1

Fig. 17